(19) Europäisches Patentamt / European Patent Office / Office européen des brevets

(11) **EP 3 041 671 B1**

(12) **EUROPÄISCHE PATENTSCHRIFT**

(45) Veröffentlichungstag und Bekanntmachung des Hinweises auf die Patenterteilung:
**06.11.2019 Patentblatt 2019/45**

(51) Int Cl.:
*B31B 70/04* (2017.01)    *B31B 150/00* (2017.01)
*B31B 160/20* (2017.01)    *B29C 65/10* (2006.01)
*B29C 65/78* (2006.01)    *B29C 69/00* (2006.01)

(21) Anmeldenummer: **14761578.5**

(22) Anmeldetag: **02.09.2014**

(86) Internationale Anmeldenummer:
**PCT/EP2014/002372**

(87) Internationale Veröffentlichungsnummer:
**WO 2015/032486 (12.03.2015 Gazette 2015/10)**

(54) **VERFAHREN UND VORRICHTUNG ZUR HERSTELLUNG VON KREUZBODEN-SÄCKEN**

METHOD AND DEVICE FOR PRODUCING CROSS BOTTOM BAGS

PROCÉDÉ ET DISPOSITIF DE FABRICATION DE SACS À FOND CROISÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.09.2013 DE 102013014732**

(43) Veröffentlichungstag der Anmeldung:
**13.07.2016 Patentblatt 2016/28**

(73) Patentinhaber: **Windmöller & Hölscher KG**
**49525 Lengerich/Westf. (DE)**

(72) Erfinder:
• **LAMKEMEYER, Andreas**
**49186 Bad Iburg (DE)**
• **DUWENDAG, Rüdiger**
**49525 Lengerich (DE)**
• **HAWIGHORST, Thomas**
**49205 Hasbergen (DE)**

(74) Vertreter: **Laufhütte, Dieter**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
**DE-A1-102008 017 443    DE-A1-102009 000 893**

EP 3 041 671 B1

**Beschreibung**

Die vorliegende Erfindung betrifft ein Verfahren und eine Vorrichtung zur Herstellung von Kreuzboden-Säcken aus Schlauchstücken, insbesondere zur Herstellung von Kreuzboden-Säcken aus Schlauchstücken, welche Gewebe aus gereckten Kunststoffbändchen umfassen und aus zwei übereinander liegenden Materiallagen bestehen.

Solche Vorrichtungen umfassen üblicherweise eine Transporteinrichtung zum kontinuierlichen Transportieren der Schlauchstücke entlang eines Transportweges in einer Transportrichtung (x), die quer zu ihrer Erstreckungsrichtung (z) verläuft. Dabei sind entlang der Transporteinrichtung üblicherweise mehrere Bearbeitungsvorrichtungen vorgesehen, welche die Schlauchstücke bearbeiten, während sie auf der Transportvorrichtung kontinuierlich transportiert werden.

Beispielsweise können dabei eine Bodenöffnungsstation zum Legen eines offenen Kreuzbodens, eine Ventilzettelauflagestation, eine Bodenschließstation und gegebenenfalls eine Deckblattauflagestation vorgesehen sein. Weiterhin ist zur Beschickung der Transporteinrichtung mit Schlauchstücken üblicherweise eine Übergabevorrichtung vorgesehen, welche die Schlauchstücke an die Transporteinrichtung übergibt. Üblicherweise werden die Schlauchstücke der Übergabevorrichtung dabei in Längsrichtung zugeführt und sind durch die Übergabevorrichtung in Transportrichtung (x) an die Transporteinrichtung übergebbar. Solche Vorrichtungen zur Herstellung von Säcken aus Schlauchstücken sind beispielsweise aus den Druckschriften DE 10 2008 017 443 A1 und DE 10 2009 000 893 A1 bekannt.

Bei solchen Vorrichtungen werden die Werkzeuge, mit welchen die Übergabevorrichtung bzw. die Bearbeitungsvorrichtung auf die Schlauchstücke einwirken, synchron zur Transporteinrichtung in Transportrichtung bewegt, um die Werkzeuge mit der Bewegung der Schlauchstücke auf der Transportvorrichtung mitzuführen. Hierfür sind die Werkzeuge üblicherweise an einem umlaufenden Transportmittel befestigt. Während dabei ein erstes Werkzeug mit einem Schlauchstück mitgeführt wird, läuft ein weiteres Werkzeug zurück in eine Ausgangsposition, um dort mit dem nächsten Schlauchstück in Kontakt zu treten. Der Abstand der Werkzeuge an dem Transportmittel definiert damit eine fest vorgegebene Systemlänge.

Die aus dem Stand der Technik bekannten Verfahren bzw. Vorrichtungen sind daher an eine fest vorgegebene Systemlänge gebunden. Insbesondere ist dabei üblicherweise eine Systemlänge von 635 mm vorgesehen, so dass max. 600 mm breite Schlauchstücke verarbeitet werden können, welche in einem Abstand von 35 mm auf der Transporteinrichtung transportiert werden. Werden schmalere Schlauchstücke verarbeitet, werden diese in gleicher Weise bearbeitet wie Schlauchstücke mit maximaler Breite, so dass es zu entsprechend großen Lücken zwischen den einzelnen, auf der Transporteinrichtung abgelegten und verarbeiteten Schlauchstücken kommt.

Soll die Verarbeitungsleistung einer solchen Maschine dabei z. B. um 100 Takte / Minute gesteigert werden, erhöht sich automatisch die Bahngeschwindigkeit der Transporteinrichtung um die Taktzahl mal Systemlänge, d.h. um 100 Takte / Minute * 635 mm = 63,5 m / Minute.

Aufgabe der vorliegenden Erfindung ist es daher, ein Verfahren und eine Vorrichtung zur Herstellung von Kreuzboden-Säcken aus Schlauchstücken zur Verfügung zu stellen, bei welchen die Taktgeschwindigkeit erhöht werden kann, ohne dass die Bahngeschwindigkeit der Transporteinrichtung in gleicher Weise erhöht werden müsste.

Erfindungsgemäß wird diese Aufgabe durch ein Verfahren gemäß Anspruch 1 bzw. eine Vorrichtung gemäß Anspruch 8 gelöst.

Vorteilhafte Ausgestaltungen der vorliegenden Erfindung sind Gegenstand der Unteransprüche.

Die vorliegende Erfindung umfasst dabei ein Verfahren zur Herstellung von Kreuzboden-Säcken aus Schlauchstücken mit einer wählbaren Breite $B_i$, umfassend die Schritte:

- Festlegung der zu verarbeitenden Breite $B_i$ der Schlauchstücke und Bereitstellung von Schlauchstücken mit entsprechender Breite,
- Übergeben der Schlauchstücke an eine Transporteinrichtung,
- kontinuierliches und bevorzugt gleichförmiges Transportieren der Schlauchstücke entlang eines Transportweges in einer Transportrichtung (x), die quer zu der Erstreckungsrichtung (z) und parallel zur der Breitenrichtung der Schlauchstücke verläuft, wobei die Schlauchstücke vorteilhafterweise in horizontaler Lage transportiert werden,
- Legen eines offenen Kreuzbodens, vorteilhafterweise mit mindestens einem umlaufenden Werkzeug durch Aufspreizen der zuvor geöffneten Enden der Schlauchstücke und durch Ausrichten der sich dabei bildenden Eckeinschläge.

Erfindungsgemäß wird dabei die Übergabe und Bearbeitung der Schlauchstücke in Abhängigkeit von der Breite $B_i$ der Schlauchstücke so variiert, dass die Schlauchstücke auf der Transporteinrichtung mit einem von der Breite $B_i$ der Schlauchstücke unabhängigen Abstand zueinander angeordnet und bearbeitet werden.

Das Verfahren gemäß der vorliegenden Erfindung erlaubt damit gerade bei der Verarbeitung von Schlauchstücken mit einer Breite $B_i$, welche deutlich kleiner als die maximal verarbeitbare Schlauchbreite ist, einen enormen Effizienzgewinn. Denn anders als im Stand der Technik, bei welchem bei kleineren Schlauchbreiten $B_i$ schlicht größere Abstände zwischen den einzelnen Schlauchstücken auf der Transportvorrichtung verblieben, da die Schlauchvorderkanten unabhängig von der Schlauchbreite stets den gleichen Abstand hatten, wird nun erfindungsgemäß der Platz auf der Transporteinrichtung optimal ausgenutzt. Hierdurch kann ohne eine Erhöhung der Transportgeschwindigkeit die Anzahl der in einer vorgegebenen Zeiteinheit verarbeitbaren Schlauchstücke erhöht werden.

Erfindungsgemäß wird zum Übergeben und Bearbeiten der Schlauchstücke mindestens ein Werkzeug eingesetzt, welches hierzu mit den Schlauchstücken in Kontakt gebracht wird. Dabei wird der zeitliche Abstand zwischen den Zeitpunkten, zu welchen das mindestens eine Werkzeug mit aufeinander folgenden Schlauchstücken in Kontakt tritt, in Abhängigkeit von der Breite $B_i$ der Schlauchstücke eingestellt. Anders als im Stand der Technik hängt der zeitliche Abstand zwischen den Zeitpunkten, zu welchen das mindestens eine Werkzeug mit aufeinander folgenden Schlauchstücken in Kontakt tritt, daher nicht mehr nur von der Geschwindigkeit der Transporteinrichtung ab, sondern zusätzlich von der Schlauchbriete. Insbesondere kann der zeitliche Abstand dabei so eingestellt werden, dass die Transporteinrichtung und damit die zu verarbeitenden Schlauchstücke in diesem Zeitraum um eine Strecke $B_i$ + A weiter transportiert werden. Durch diese Einstellung der Werkzeuge der erfindungsgemäßen Vorrichtung wird somit eine Anpassung der effektiven Systemlänge an die Breite $B_i$ der Schlauchstücke ermöglicht.

Erfindungsgemäß kann mindestens eine Komponente der Vorrichtung dabei ein Werkzeug aufweisen, welches in Transportrichtung x bewegbar ist. Vorteilhafterweise erfolgt die Bewegung des Werkzeugs in Transportrichtung x dabei während des Kontaktes mit dem Schlauchstück synchronisiert zur Transportbewegung der Schlauchstücke. Insbesondere kann die Bewegung des Werkzeuges dabei mit einer definierten Relativgeschwindigkeit zur Transportbewegung der Schlauchstücke erfolgen, um hierdurch eine definierte Relativbewegung des Werkzeuges zum Schlauchstück während der Kontaktzeit zu erreichen. In einer möglichen Ausgestaltung kann diese Relativbewegung auch 0 betragen, so dass das Werkzeug mit der gleichen Geschwindigkeit wie die Transporteinrichtung bewegt wird. Soll das Werkzeug das Schlauchstück während des Kontaktes dagegen überstreichen, erfolgt die Bewegung des Werkzeugs bevorzugt langsamer als die Bewegung der Transporteinrichtung.

Vorteilhafterweise beschreibt das Werkzeug erfindungsgemäß eine umlaufende Bahn. Insbesondere kann es hierfür an einem umlaufenden Transportmittel angeordnet sein. Vorteilhafterweise steht das Werkzeug dabei über einen Teilbereich der umlaufenden Bahn mit dem Schlauchstück in Kontakt, während der übrige Teilbereich der umlaufenden Bahn dazu genutzt wird, das Werkzeug zurück in seine Ausgangsposition zu verfahren, in welcher es mit einem weiteren Schlauchstück in Kontakt treten kann.

Bevorzugt wird das erfindungsgemäße Werkzeug dabei ungleichförmig angetrieben. Bevorzugt wird dabei die Größe der Ungleichförmigkeit in Abhängigkeit von der Breite $B_i$ der zu verarbeitenden Schlauchstücke eingestellt.

In einer möglichen Ausführungsform der vorliegenden Erfindung können dabei mindestens zwei Werkzeuge eingesetzt werden, welche unabhängig voneinander bewegbar sind und abwechselnd mit den Schlauchstücken in Kontakt gebracht werden. Hierdurch verringert sich für jedes der eingesetzten Werkzeuge der Grad der Ungleichförmigkeit der Bewegung. Weiterhin ist die Bewegung der Werkzeuge erheblich flexibler an unterschiedliche Schlauchbreiten anpassbar. Insbesondere können dabei zwei einnutzige Werkzeuge, welche jeweils an separaten umlaufenden Transportmitteln angeordnet sind und abwechselnd mit den Schlauchstücken in Kontakt treten, eingesetzt werden.

Weiterhin kann die Übergabevorrichtung der vorliegenden Erfindung mindestens ein Werkzeug aufweisen, insbesondere einen Mitnehmer, welches mit dem Schlauchstück in Kontakt gebracht wird. Das Werkzeug wird dabei bevorzugt in Transportrichtung x bewegt, um die einzelnen, in Längsrichtung zugeführten Schlauchstücke an die Transporteinrichtung in Transportrichtung x zu übergeben.

Bevorzugt beschreibt das Werkzeug dabei eine umlaufende Bahn, wobei der Bewegungsantrieb des Werkzeugs in Abhängigkeit von der Breite $B_i$ der Schlauchstücke ungleichförmig angetrieben wird und / oder die Umlauflänge des Werkzeugs in Abhängigkeit der Breite $B_i$ der Schlauchstücke verändert wird.

Insbesondere kann das Werkzeug dabei über einen Servomotor angetrieben werden, wobei die Ungleichförmigkeit der Bewegung durch eine entsprechende Ansteuerung des Servomotors erzeugt wird.

Weiterhin kann das Werkzeug in Abhängigkeit davon, ob es in Kontakt mit einem Schlauchstück steht oder nicht, mit unterschiedlichen Antriebsgeschwindigkeiten bewegt werden. Bevorzugt wird dabei die Geschwindigkeit der Bewegung des Werkzeugs, während es nicht in Kontakt mit einem Schlauchstück steht, in Abhängigkeit von der Breite $B_i$ der Schlauchstücke eingestellt.

Weiterhin kann erfindungsgemäß vorgesehen sein, dass ein Werkzeug der Bodenöffnungsstation ungleichförmig angetrieben wird und der zeitliche Abstand zwischen den Zeitpunkten, zu welchen das mindestens eine Werkzeug mit aufeinander folgenden Schlauchstücken in Kontakt tritt, durch Anpassen des Bewegungsprofils des Werkzeugs in Abhängigkeit von der Breite $B_i$ der Schlauchstücke eingestellt wird. Insbesondere kann die Ungleichförmigkeit der Bewegung dabei so eingestellt werden, dass zwischen den Zeitpunkten, zu welchen das Werkzeug mit aufeinander folgenden Schlauchstücken in Kontakt tritt, die Transporteinrichtung die Schlauchstücke um eine Breite $B_i$ + A weiter transportiert.

Weiterhin kann erfindungsgemäß vorgesehen sein, dass in einer Zettelauflagestation auf mindestens ein Ende der Schlauchstücke Zettel aufgelegt werden. Insbesondere kann es sich bei diesen Zetteln dabei um Ventilzettel und / oder Bodendeckblätter handeln.

Bevorzugt wird dabei mindestens eine Komponente der Zettelauflagestation in Abhängigkeit von der Breite $B_i$ der Schlauchstücke ungleichförmig angetrieben und / oder zur Veränderung ihres Durchmessers ausgetauscht.

Bei der Komponente kann es sich dabei um eine Schneidrolle, über welche die Zettel abgelenkt werden, handeln. Bevorzugt wird die Schneidrolle dabei ungleichförmig angetrieben.

Weiterhin kann es sich bei der Komponente auch um eine Saugrolle, über welche die Zettel aufgelegt werden, handeln. Weist die Saugrolle dabei einen Initialpunkt auf, welcher mit einem definierten Bereich der Zettel in Kontakt kommen muss, so wird die Saugrolle dabei bevorzugt ebenfalls ungleichmäßig angetrieben. Insbesondere kann der Initialpunkt der Saugrolle dabei durch ungleichförmig über den Umfang der Saugrolle verteilte Saugöffnungen definiert werden.

Weiterhin kann es sich bei der Komponente auch um eine Gegendruckrolle handeln, über welche ein Gegendruck auf die Schlauchstücke aufgebracht wird. Weist die Gegendruckrolle dabei ebenfalls einen Initialpunkt auf, welcher mit einem definierten Bereich der Schlauchstücke in Kontakt treten muss, so wird die Gegendruckrolle bevorzugt ebenfalls ungleichförmig angetrieben und / oder zur Anpassung an die Breite der Schlauchstücke ausgetauscht. Der Initialpunkt kann dabei durch einen erhabenen Bereich der Gegendruckrolle definiert werden. Wird die Gegendruckrolle dabei ausgetauscht, so werden bevorzugt Gegendruckrollen mit unterschiedlichem Durchmesser eingesetzt und mit einem an den jeweiligen Durchmesser angepassten Abstand von der Position der Schlauchstücke gelagert. Beispielsweise kann hierzu eine Lagerstelle verschoben und / oder verschwenkt werden. Alternativ kann die Gegendruckrolle auch an unterschiedlichen Lagerstellen gelagert werden.

Weiterhin kann die Zettelauflagestation auch ein Heißluftgebläse aufweisen, wobei der vom Heißluftgebläse gelieferte Heißluftstrom in Abhängigkeit von der Breite der Zettel und damit in Abhängigkeit von der Breite $B_i$ der Schlauchstücke ein- und ausgeschaltet wird.

Auch weitere Bearbeitungsschritte können an die Breite $B_i$ der Schlauchstücke angepasst werden. Beispielsweise kann es sich dabei um die Zeitfenster von Sensoren handeln, oder um die Bewegung von Rollen wie beispielsweise Beschleunigungsrollen, welche taktweise aktiv werden.

Das erfindungsgemäße Verfahren erfolgt dabei bevorzugt in der Form, dass die Schlauchstücke gleichförmig auf der Transporteinrichtung transportiert werden, so dass sämtliche Bearbeitungsschritte erfolgen, während die Schlauchstücke gleichförmig bewegt werden. Insbesondere bei der Bodenöffnungsstation erfordert dies eine entsprechende Mitführung der zur Bodenöffnung eingesetzten Werkzeuge. Die entsprechende erfindungsgemäße Ansteuerung der Bodenöffnungsstation wurde dabei bereits oben näher dargestellt.

Das erfindungsgemäße Verfahren kann jedoch auch dann eingesetzt werden, wenn der Transport der Schlauchstücke teilweise oder komplett taktgebunden erfolgt. In diesem Fall wird vorteilhafterweise mindestens eine Komponente der Vorrichtung, insbesondere die Bodenöffnungsstation, zur Anpassung an die Breite $B_i$ der Schlauchstücke in Transportrichtung x verschoben. Hierdurch wird sichergestellt, dass die Strecke zwischen einer Übergabevorrichtung und der Komponente ein Vielfaches der durch die Breite $B_i$ der Schlauchstücke definierten Systemlänge $B_i + A$ beträgt.

Das erfindungsgemäße Verfahren kann dabei insbesondere in der Weise erfolgen, dass die Schlauchstücke zunächst kontinuierlich bewegt werden, um die Schlauchenden hochzuklappen. Daraufhin werden die Schlauchstücke an einen separaten, taktgebunden bewegten Bereich der Transporteinrichtung übergeben, wo die Bodenöffnung erfolgt. Dies hat den Vorteil, dass die Werkzeuge zur Öffnung des Bodens nicht mit der Transporteinrichtung mitbewegt werden müssen. Daraufhin werden die Schlauchstücke wieder an einen gleichförmig arbeitenden Bereich der Transporteinrichtung übergeben, wo dann das Auflegen von Zetteln und / oder das Schließen der Böden erfolgt.

Unabhängig von der genauen Ausgestaltung der Transporteinrichtung und der Frage, ob diese gleichförmig oder zumindest teilweise taktgebunden angetrieben wird, erlaubt das erfindungsgemäße Verfahren dabei jedoch insbesondere bei geringen Schlauchbreiten $B_i$ eine erhebliche Effizienzsteigerung.

Das erfindungsgemäße Verfahren kann dabei insbesondere zur Herstellung von Kreuzboden-Säcken aus Schlauchstücken, welche Gewebe aus gereckten Kunststoffbändchen umfassen, eingesetzt werden. Insbesondere kann das Gewebe aus gereckten Kunststoffbändchen dabei eine Beschichtung aus einem Polymer aufweisen. Eine solche Beschichtung erlaubt ein Verschweißen der Materiallagen, insbesondere bei der Herstellung der Böden. Insbesondere werden die Materiallagen dabei heißluftverschweißt. Das erfindungsgemäße Verfahren kann jedoch auch zur Herstellung von Kreuzbodensäcken aus anderen Materialien eingesetzt werden, und insbesondere auch zur Herstellung von Kreuzboden-Säcken aus Papier. Dabei können die Materiallagen verklebt werden.

Die vorliegende Erfindung umfasst weiterhin eine Vorrichtung zur Herstellung von Kreuzboden-Säcken aus Schlauchstücken, welche eine Transporteinrichtung, eine Übergabevorrichtung und mindestens eine Bodenöffnungsstation umfasst. Die Transporteinrichtung dient dabei zum kontinuierlichen und bevorzugt gleichförmigen Transportieren der Schlauchstücke entlang eines Transportweges in einer Transportrichtung (x), die quer zu der Erstreckungsrichtung (z) und parallel zu der Breitenrichtung der Schlauchstücke verläuft, wobei die Schlauchstücke vorteilhafterweise in horizontaler Lage förderbar sind. Die Übergabevorrichtung dient dazu, die Schlauchstücke an die Transporteinrichtung zu übergeben. Die Bodenöffnungsstation dient zum Legen eines offenen Kreuzbodens und umfasst vorteilhafterweise mindestens ein umlaufendes Werkzeug zum Aufspreizen der zuvor geöffneten Enden der Schlauchstücke und zum Ausrichten der sich dabei bildenden Eckeinschläge.

Erfindungsgemäß weist die Vorrichtung dabei Einstellmittel auf, mittels welcher die Vorrichtung in Abhängigkeit von der Breite $B_i$ der Schlauchstücke so einstellbar ist, dass eine Anordnung und/oder Bearbeitung der Schlauchstücke auf der Transporteinrichtung mit einem von der Breite der Schlauchstücke unabhängigen Abstand A zueinander erfolgt. Die vorliegende Erfindung sieht damit eine systemlängenunabhängige Maschine vor. Dies bedeutet, dass der sich durch eine geringere Breite der Schlauchstücke ergebende Raum auf dem Transportband im Gegensatz zu den bisher eingesetzten Maschinen durch die vorliegende Erfindung genutzt werden kann, um weitere Schlauchstücke auf dem Transportband anzuordnen. Dies ermöglicht eine bessere Ausnutzung des Transportbandes und damit bei schmäleren Schlauchstücken eine höhere Taktzahl, ohne dass die Bahngeschwindigkeit erhöht werden müsste.

Vorteilhafterweise sind die Schlauchstücke dabei unabhängig von ihrer Breite $B_i$ mit einem vorgegebenen Abstand A zueinander auf der Transporteinrichtung anordenbar und bearbeitbar. Insbesondere kann dabei vorgesehen sein, dass zu verarbeitende Schlauchstücke unabhängig von ihrer Breite immer einen festen Abstand A aufweisen. Der Abstand A kann dabei beispielsweise zwischen 10 mm und 100 mm liegen, bevorzugt zwischen 20 mm und 50 mm.

Die erfindungsgemäßen Einstellmittel, welche eine von der Breite der Schlauchstücke unabhängige Anordnung und Bearbeitung erlauben, können dabei durch eine entsprechende konstruktive Ausgestaltung der Vorrichtung, welche eine Anpassung an die Schlauchbreite erlaubt, und / oder eine an die Schlauchbreite anpassbare elektronische Steuerung verwirklicht werden.

Bevorzugt sind die Schlauchstücke dabei mittels der Übergabevorrichtung so an die Transporteinrichtung übergebbar, dass diese unabhängig von ihrer Breite $B_i$ mit einem vorgegebenen Abstand A zueinander auf der Transporteinrichtung anordenbar sind. Alternativ oder zusätzlich sind die mit einem von ihrer Breite unabhängigen, vorgegebenen Abstand A zueinander auf der Transporteinrichtung angeordneten Schlauchstücke mittels mindestens einer Bearbeitungsvorrichtung bearbeitbar. Die mindestens eine Bearbeitungsvorrichtung bearbeitet die Schlauchstücke dabei bevorzugt in mindestens einem Bearbeitungsschritt, während diese auf der Transportvorrichtung kontinuierlich transportiert werden. Bei der Bearbeitungsvorrichtung kann es sich dabei um die Bodenöffnungsstation oder um eine andere Bearbeitungsstation handeln.

Erfindungsgemäß weist mindestens eine Komponente der Vorrichtung ein Werkzeug auf, welches zum Übergeben und Bearbeiten der Schlauchstücke mit diesen in Kontakt gebracht wird, wobei der zeitliche Abstand zwischen den Zeitpunkten, zu welchen das mindestens eine Werkzeug mit aufeinander folgenden Schlauchstücken in Kontakt tritt, in Abhängigkeit von der Breite $B_i$ der Schlauchstücke einstellbar ist. Hierdurch kann sichergestellt werden, dass die Schlauchstücke mit einem von der Breite unabhängigen Abstand A übergeben und bearbeitet werden können. Erfindungsgemäß ist damit der der zeitliche Abstand zwischen den Zeitpunkten, zu welchen das mindestens eine Werkzeug mit aufeinander folgenden Schlauchstücken in Kontakt tritt, nicht mehr nur von der Transportgeschwindigkeit der Transporteinrichtung abhängig, sondern auch von der Breite $B_i$ der Schlauchstücke. Insbesondere kann dabei der zeitliche Abstand zwischen den Zeitpunkten, zu welchen das mindestens eine Werkzeug mit aufeinander folgenden Schlauchstücken in Kontakt tritt, so gewählt werden, dass die Transporteinrichtung sich in diesem Zeitraum um eine Strecke $B_i + A$ weiter bewegt.

In einer möglichen Ausführungsform der vorliegenden Erfindung ist mindestens eine Komponente der Übergabevorrichtung und/oder einer Zettelauflagestation ungleichförmig antreibbar und / oder in ihrer Größe und / oder Position veränderbar. Die erfindungsgemäßen Mittel sind damit durch eine den ungleichförmigen Antrieb bewirkende Steuerung und / oder der die Veränderbarkeit der Komponente in Größe und / oder Position im Aufbau verwirklicht.

Bevorzugt weist die Vorrichtung dabei eine Steuerung auf, welche so ausgestaltet ist, dass sie mindestens eine Komponente ungleichförmig antreibt. Bevorzugt wird die Komponente dabei durch einen Servomotor angetrieben. Dies erlaubt es, die Bewegung der Komponente mit der Bewegung des Schlauchstücks zu synchronisieren, solange die Komponente auf das Schlauchstück einwirkt, und durch eine Ungleichförmigkeit im übrigen Bewegungsablauf die unterschiedlichen Breiten der Schlauchstücke, welche mit der Vorrichtung verarbeitet werden können, auszugleichen. Bevorzugt betreibt die Steuerung die Komponente dabei in Abhängigkeit davon, ob sie in Eingriff mit einem Schlauchstück steht oder nicht, mit unterschiedlichen Antriebsgeschwindigkeiten. Alternativ oder zusätzlich kann die Komponente in Abhängigkeit von der Breite der Schlauchstücke mit unterschiedlichen Antriebsgeschwindigkeiten betrieben werden.

Bevorzugt umfasst die Vorrichtung eine Komponente mit einem Werkzeug, welches mit dem Schlauchstück in Kontakt bringbar ist, wobei das Werkzeug in Transportrichtung (x) bewegbar ist. Vorteilhafterweise ist dabei vorgesehen, dass die Bewegung des Werkzeugs in Transportrichtung (x) während des Kontaktes mit dem Schlauchstück synchronisiert zur Transportbewegung der Schlauchstücke erfolgt, d.h. mit einer vorgegebenen Relativbewegung (welche ggf. auch Null sein kann) zur Transportbewegung der Schlauchstücke erfolgt.

Weiterhin kann vorgesehen sein, dass das Werkzeug eine umlaufende Bahn beschreibt. Insbesondere ist das Werkzeug hierfür an einem umlaufenden Transportmittel angeordnet. Weiterhin kann vorgesehen sein, dass das Werkzeug über einen Teilbereich der umlaufenden Bahn mit dem Schlauchstück in Kontakt steht. Der übrige Teilbereich der umlaufenden Bahn dient dann dazu, das Werkzeug wieder zurück in seine Ausgangsposition zu bringen.

Besonders bevorzugt erfolgt dabei die Bewegung der Werkzeuge in Transportrichtung (x) nach der Beendigung eines Kontaktes mit einem Schlauchstück und vor Aufnahme des Kontaktes mit dem folgenden Schlauchstück zumindest über einen Teil-Wegbereich mit einer anderen Geschwindigkeit, als während eines Kontaktes. Bevorzugt hängt dabei diese Geschwindigkeit, mit welcher das Werkzeug ohne Kontakt zum Schlauchstück bewegt wird, von der Breite $B_i$ der Schlauchstücke ab.

Erfindungsgemäß kann damit die Anpassung an unterschiedliche Breiten der Schlauchstücke dadurch erfolgen, dass mindestens eine und bevorzugt mehrere Komponenten der Vorrichtung ungleichförmig angetrieben werden, wofür entsprechende Steuerungsmodi in der Steuerung vorgesehen sein können.

In einer bevorzugten Ausgestaltung der vorliegenden Erfindung können dabei mindestens zwei Werkzeuge eingesetzt werden, welche unabhängig voneinander bewegbar sind und abwechselnd mit den Schlauchstücken in Kontakt gebracht werden können. Dies erhöht die Flexibilität bei der Ansteuerung der Werkzeuge. Besonders bevorzugt ist die erfindungsgemäße Vorrichtung für eine mittlere Breite $B_m$ der Schlauchstücke ausgelegt, beispielsweise für Schlauchstücke mit einer Breite $B_m$ zwischen 400 mm und 600 mm, bevorzugt für Schlauchstücke mit einer Breite $B_m$ zwischen 450 mm und 550 mm. Zur Verarbeitung von Schlauchstücken kleinerer oder größerer Breite $B_i$ erfolgt dann eine entsprechende Anpassung der Vorrichtung. Bevorzugt wird dabei mindestens eine Komponente für eine mittlere Breite der Schlauchstücke mit gleichförmiger Geschwindigkeit angetrieben und bei kleinerer oder größerer Breite ungleichförmig, wobei die Komponente bevorzugt bei größerer Breite über einen Teilbereich der Bewegung langsamer und bei kleinerer Breite schneller betrieben wird, und zwar insbesondere über den Teilbereich, in welchem kein Kontakt mit den Schlauchstücken besteht. Durch die Ausrichtung auf eine mittlere Systemlänge werden die Beschleunigungen, die für die Anpassung an andere Größen notwendig sind, verringert.

Alternativ oder zusätzlich kann die Taktzeit der Bewegung des Werkzeuges in Transportrichtung (x) auch durch eine Veränderung der Größe und / oder Position der Komponente oder eines Teils der Komponente an die Breite der Schlauchstücke anpassbar sein. Insbesondere ist die Vorrichtung dabei so ausgestaltet, dass die Komponente oder ein Teil der Komponente in unterschiedlichen Positionen montierbar und / oder bezüglich ihrer Position verschiebbar sind. Alternativ oder zusätzlich kann die Vorrichtung so ausgeführt sein, dass unterschiedlich große Komponenten und / oder Teile von Komponenten einsetzbar sind.

Bei der erfindungsgemäßen Komponente, welche mit dem Schlauchstück in Eingriff kommen kann und / oder welche ein Werkzeug aufweist, welche mit dem Schlauchstück in Kontakt bringbar ist, kann es sich dabei insbesondere um die Übergabevorrichtung und / oder eine Zettelauflagestation handeln.

Die erfindungsgemäße Vorrichtung dient dabei bevorzugt zur Herstellung von Säcken aus Schlauchstücken, welche Gewebe aus gereckten Kunststoffbändchen umfassen und aus zwei übereinander liegenden Materiallagen bestehen. Bevorzugt ist das Gewebe dabei mit einer Beschichtung aus einem Polymer versehen.

Die erfindungsgemäße Vorrichtung kann dabei bevorzugt mindestens eine und bevorzugt mehrere der folgenden Komponenten umfassen:

- eine Transporteinrichtung zum kontinuierlichen Transportieren der Schlauchstücke entlang eines Transportweges in eine Transportrichtung (x), die quer zu ihrer Erstreckungsrichtung (z) verläuft, wobei die Schlauchstücke vorteilhafterweise in horizontaler Lage förderbar sind;

- eine Abwickelvorrichtung, von der schlauchförmiges Material oder bahnförmiges Material, aus welchem ein Schlauch bildbar ist, abwickelbar und in Längsrichtung (z) vorschiebbar ist;

- eine Vereinzelungsvorrichtung, mittels welcher die einzelnen, in Längsrichtung zugeführten Schlauchstücke von dem schlauchförmigen Material abtrennbar sind;

- eine Übergabevorrichtung, mittels welcher die einzelnen, in Längsrichtung zugeführten Schlauchstücke an die Transporteinrichtung in Transportrichtung (x) übergebbar und von dieser übernehmbar sind;

- eine Bodenöffnungsstation zum Legen eines offenen Kreuzbodens, welche vorteilhafterweise mindestens ein umlaufendes Werkzeug, insbesondere ein Sichelpaar zum Aufspreizen der zuvor geöffneten Enden der Schlauchstücke und zum Ausrichten der sich dabei bildenden Eckeinschläge umfasst;

- eine Ventilzettelauflagestation;

- eine Bodenschließstation und

- wahlweise zumindest eine Deckblattauflagestation.

Bei der Ventilzettelauflagestation und der Deckblattauflagestation handelt es sich dabei jeweils um Zettelauflagestationen im Sinne der vorliegenden Erfindung.

Bevorzugt erfolgt der Transport der Schlauchstücke auf der Transporteinrichtung dabei mit gleichförmiger Geschwindigkeit. Da die Schlauchstücke erfindungsgemäß unabhängig von ihrer Breite mit einem vorgegebenen Abstand auf der Transporteinrichtung abgelegt und von dieser transportiert werden, bedeutet dies, dass die Bewegung der übrigen Komponenten der Vorrichtung an die Schlauchbreite angepasst werden muss.

In einer bevorzugten Ausführungsform wird die Transporteinrichtung dabei über ihre gesamte Erstreckung gleichförmig bewegt. Alternativ kann die vorliegende Erfindung jedoch auch bei solchen Vorrichtungen zum Einsatz kommen, bei welchen die Transporteinrichtung teilweise taktgebunden und teilweise gleichförmig bewegt wird. In einer möglichen Ausführungsform wird dabei ein erster, vor der Bodenöffnungsstation angeordneter Teil der Transporteinrichtung gleichförmig bewegt, ein zweiter, der Bodenöffnungsstation zugeordneter Teil taktgebunden und ein dritter, nach der Bodenöffnungsstation angeordneter Teil wieder gleichförmig bewegt. Alternativ kann die Transporteinrichtung jedoch auch komplett taktgebunden angetrieben werden.

Wird die Transporteinrichtung teilweise oder komplett taktgebunden angetrieben, so ist bevorzugt mindestens eine Station, insbesondere die Übergabestation und/oder eine Bearbeitungsstation, insbesondere die Bodenöffnungsstation, in Transportrichtung x verschiebbar angeordnet. Hierdurch kann die Position dieser Station in Abhängigkeit von der Breite $B_i$ der Schlauchstücke eingestellt werden, wobei insbesondere die Strecke zwischen der Übergabestation und der Bearbeitungsstation auf ein vielfaches der Systembreite $B_i$ + A eingestellt werden kann.

Insbesondere kann die Übergabevorrichtung dabei mindestens ein Werkzeug, insbesondere einen Mitnehmer, umfassen, welches mit dem Schlauchstück in Kontakt bringbar ist, wobei das Werkzeug in Transportrichtung (x) bewegbar ist, um die einzelnen, in Längsrichtung zugeführten Schlauchstücke an die Transporteinrichtung in Transportrichtung (x) zu übergeben, wobei das Werkzeug eine umlaufende Bahn beschreibt.

Zur Anpassung der Übergabevorrichtung an die Breite der Schlauchstücke ist dabei der Bewegungsantrieb des Werkzeugs ungleichförmig antreibbar, und / oder die Umlauflänge des Werkzeuges veränderbar.

Erfolgt die Anpassung dabei durch einen ungleichförmigen Antrieb, ist bevorzugt eine Steuerung vorgesehen, welche den Bewegungsantrieb automatisiert so antreibt, dass er die Schlauchstücke synchron zur Transportbewegung der Transporteinrichtung an die Transporteinrichtung übergibt, während die Geschwindigkeit, mit welcher das Werkzeug in seine Ausgangsposition zurückbewegt wird, von der Schlauchbreite abhängt.

Dabei können in einer möglichen Ausführungsform mindestens zwei Werkzeuge eingesetzt werden, welche unabhängig voneinander bewegbar sind und abwechselnd mit den Schlauchstücken in Kontakt gebracht werden können. Insbesondere können dabei zwei unabhängig voneinander bewegbar einnutzige Werkzeuge eingesetzt werden. Insbesondere kann dabei an zwei unabhängig arbeitenden, umlaufenden Transportmitteln jeweils ein Mitnehmer angeordnet sein, wobei die Mitnehmer durch eine entsprechende Ansteuerung der Transportmittel abwechselnd arbeiten.

Der Antrieb des oder der Werkzeuge kann dabei durch einen oder mehrere Servormotoren erfolgen.

Eine alternativ oder zusätzlich einsetzbare Veränderung der Umlauflänge zur Anpassung an die Schlauchbreite kann beispielsweise durch Einfügen oder Entnehmen von Kettengliedern aus einem Kettenantrieb erfolgen, oder durch ein dehnbares Antriebsband. Alternativ oder zusätzlich können entsprechende Umlaufräder des Bewegungsantriebes verstellbar sein.

Weiterhin kann die erfindungsgemäße Vorrichtung eine Bodenöffnungsstation umfassen, welche mindestens ein Werkzeug aufweist, welches mit dem Schlauchstück in Kontakt bringbar ist, wobei das Werkzeug in Transportrichtung (x) bewegbar ist, um die auf der Transporteinrichtung gleichförmig bewegten Schlauchstücke zu bearbeiten. Vorzugsweise beschreibt das Werkzeug dabei eine umlaufende Bahn.

Insbesondere kann vorgesehen sein, dass das Werkzeug so lange synchronisiert mit der Transportgeschwindigkeit der Transporteinrichtung bewegt wird, wie dieses mit dem Schlauchstück in Kontakt steht und dieses bearbeitet. Hierbei wird das Werkzeug üblicherweise mit einer definierten Relativgeschwindigkeit zu der Transportgeschwindigkeit der Transporteinrichtung bewegt, um das auf der Transporteinrichtung angeordnete Schlauchstück in Breitenrichtung zu überstreichen.

Bevorzugt beschreibt das Werkzeug dabei eine umlaufende Bahn, um nach der Bearbeitung eines Schlauchstückes zurück in eine Ausgangsposition verfahren zu werden, von welcher aus ein weiteres Werkstück bearbeitet wird. Bei dem Werkzeug der Bodenöffnungsstation kann es sich dabei insbesondere um Saugvorrichtungen handeln, und / oder ein Element, insbesondere ein Sichelpaar zum Aufspreizen der geöffneten Enden der Schlauchstücke.

Bevorzugt ist erfindungsgemäß auch hier vorgesehen, dass der Bewegungsantrieb des Werkzeugs in Abhängigkeit von der Breite der Schlauchstücke ungleichförmig antreibbar ist. Insbesondere kann dabei die Geschwindigkeit, mit welcher das Werkzeug in seine Ausgangsposition zurückverfahren wird, in Abhängigkeit von der Breite der Schlauchstücke unterschiedlich eingestellt werden. Insbesondere kann dabei das ungleichförmige Bewegungsprofil des Werkzeuges so einstellbar sein, dass der zeitliche Abstand zwischen den Zeitpunkten, zu welchen das mindestens eine Werkzeug mit aufeinander folgenden Schlauchstücken in Kontakt tritt, in Abhängigkeit von der Breite $B_i$ der Schlauchstücke einstellbar ist. Alternativ oder zusätzlich kann auch hier die Umlauflänge des Werkzeugs veränderbar sein, um dieses an die unterschiedliche Breite der Schlauchstücke anzupassen. Der Antrieb des oder der Werkzeuge kann dabei durch einen oder mehrere Servormotoren erfolgen.

Weiterhin kann die erfindungsgemäße Vorrichtung eine Zettelauflagestation umfassen, welche mindestens eine Schneidrolle umfasst, welche Zettel zum Auflegen auf die Schlauchstücke abgelängt zur Verfügung stellt. Erfindungsgemäß kann dabei vorgesehen sein, dass die Schneidrolle in Abhängigkeit von der Breite der Schlauchstücke ungleichförmig und / oder mit unterschiedlicher Geschwindigkeit antreibbar ist. Auch hierfür kann eine entsprechende Steuerung vorgesehen sein.

Die Saugrolle, mit welcher die Zettel tatsächlich auf die Schlauchstücke aufgelegt werden, braucht dagegen nicht ungleichförmig antreibbar sein. Vielmehr kann deren Geschwindigkeit schlicht mit der Geschwindigkeit des Transportbandes synchronisiert werden. Alternativ kann jedoch auch hier ein ungleichförmiger Antrieb erfolgen. Insbesondere kann dabei vorgesehen sein, dass die Saugöffnungen der Saugrolle nicht über den gesamten Umfang gleichmäßig verteilt sind, so dass ein definierter Saugbereich der Saugrolle mit einem definierten Bereich der Zettel, insbesondere mit der Vorderkante der Zettel, in Kontakt treten muss. In diesem Fall erfolgt der Antrieb der Saugrolle bevorzugt mit einer über den Drehbereich ungleichförmigen Geschwindigkeit, wobei die Ungleichförmigkeit von der Breite der Zettel abhängt. Insbesondere wird die Saugrolle dabei so angetrieben, dass der definierter Saugbereich der Saugrolle immer mit einem definierten Bereich der Zettel, insbesondere mit der Vorderkante der Zettel, in Kontakt kommt.

Weiterhin kann die Zettelauflagestation eine Gegendruckrolle, über welche ein Gegendruck auf die Schlauchstücke aufgebracht wird, wenn diese über die Saugrolle auf die Schlauchstücke aufgelegt werden. Die Gegendruckrolle, auch Presseur genannt, kann dabei in Abhängigkeit von der Breite der Schlauchstücke ungleichförmig antreibbar oder zur Veränderung ihres Durchmessers austauschbar sein. Insbesondere kann die Gegendruckrolle dabei über ihren Umfang ungleichmäßig ausgestaltet sein und insbesondere einen erhabenen Bereich aufweisen, welcher mit einem definierten Bereich der Schlauchstücke, insbesondere mit einem Bereich, welcher der Vorderkante der aufgelegten Zettel entspricht, in Kontakt treten muss. In diesem Fall erfolgt der Antrieb der Gegendruckrolle bevorzugt mit einer über den Drehbereich ungleichförmigen Geschwindigkeit, wobei die Ungleichförmigkeit von der Breite der Schlauchstücke abhängt. Insbesondere wird die Gegendruckrolle dabei so angetrieben, dass der erhabene Bereich der Gegendruckrolle immer mit einem definierten Bereich der Schlauchstücke in Kontakt kommt.

Alternativ oder zusätzlich kann eine Anpassung an die Schlauchbreite $B_i$ auch durch den Einsatz von in ihrem Umfang entsprechend angepassten Gegendruckrollen erfolgen. Bevorzugt ist in diesem Fall eine Lagerung der Gegendruckrolle an der Vorrichtung mit unterschiedlichen Abständen der Drehachse von der Bahn der Schlauchstücke möglich. Insbesondere können die Lagestellen für die Gegendruckrolle dabei verschiebbar und/oder verschwenkbar sein, und/oder mehrere alternative Lagerstellen vorgesehen sein.

Die Zettelauflagestation kann weiterhin ein Heißluftgebläse aufweisen, welches in Abhängigkeit von der Breite $B_i$ der Schlauchstücke unterschiedlich angesteuert wird. Insbesondere kann dabei eine Sperrvorrichtung vorgesehen werden, welche den Luftstrom zu vorgegebenen Zeitpunkten unterbricht und wieder freigibt. Vorteilhafterweise ist dabei der zeitliche Abstand zwischen den Zeitpunkten, zu welchen der Luftstrom zur Bearbeitung aufeinander folgender Schlauchstücke wieder freigegeben wird, in Abhängigkeit von der Breite $B_i$ der Schlauchstücke einstellbar.

Weiterhin kann auch der Vorschub für das Bahnmaterial, welches der Schneidrolle zugeführt wird, ungleichförmig erfolgen. Insbesondere wird der Vorschub dabei mit der ungleichförmigen Bewegung der Schneidrolle synchronisiert.

Der Antrieb einer oder mehrere Komponenten, insbesondere der Rollen der Zettelauflagestation kann dabei durch einen oder mehrere Servormotoren erfolgen. Insbesondere werden dabei die Rollen, welche ungleichmäßig angetrieben werden, jeweils durch einen dieser Rolle separat zugeordneten Servomotor angetrieben. Die Sperrvorrichtung kann ebenfalls durch einen Servomotor und/oder über einen elektrischen, pneumatischen und/oder hydraulischen Aktor erfolgen.

Die erfindungsgemäße Vorrichtung weist bevorzugt eine Breitenvorgabeeinrichtung auf, durch welche die Breite der eingesetzten Schlauchstücke der Steuerung übergeben wird. Bevorzugt stellt die Steuerung dabei mindestens einen Antriebsparameter mindestens einer Komponente der Vorrichtung in Abhängigkeit von der Breite ein, und insbesondere den Grad der Ungleichförmigkeit der Bewegung der Komponente. Hierdurch wird sichergestellt, dass die Schlauchstücke unabhängig von ihrer Breite mit einem vorgegebenen Abstand auf dem Transportband ablegbar und bearbeitbar sind.

Die Breitenvorgabeeinrichtung kann dabei in einer möglichen Ausführungsform einen Sensor zur Ermittlung der Breite der Schlauchstücke umfassen, so dass die Vorrichtung sich automatisch an die eingesetzte Breite der Schlauchstücke anpasst.

Alternativ oder zusätzlich kann die Breitenvorgabeeinrichtung eine Eingabeeinheit zur manuellen und / oder elektronischen Eingabe der Breite aufweisen, so dass eine Bedienperson die Breite der Schlauchstücke eingeben kann.

Besonders bevorzugt ist die Vorrichtung dabei weiterhin so aufgebaut und/oder wird so betrieben, wie dies oben im Hinblick auf das erfindungsgemäße Verfahren dargestellt wurde. Insbesondere kann dabei eine Steuerung vorgesehen sein, welche Funktionen zur Durchführung des erfindungsgemäßen Verfahrens aufweist. Insbesondere kann das Verfahren dabei nach Vorgabe der Breite $B_i$ der Schlauchstücke automatisch durch die Steuerung durchgeführt werden und insbesondere die erfindungsgemäße Anpassung an die Breite $B_i$ vorgenommen werden. Weiterhin bevorzugt erfolgt auch das erfindungsgemäße Verfahren so, wie dies bereits oben im Hinblick auf die erfindungsgemäße Vorrichtung dargestellt wurde. Insbesondere kann das erfindungsgemäße Verfahren dabei unter Verwendung einer Vorrichtung erfolgen, wie diese oben dargestellt wurde.

Die vorliegende Erfindung wird nun anhand eines Ausführungsbeispiels sowie Zeichnungen näher dargestellt.

Dabei zeigen:

Fig. 1: ein Ausführungsbeispiel einer erfindungsgemäßen Vorrichtung zur Herstellung von Säcken,

Fig. 2: eine Vorrichtung gemäß dem Stand der Technik bei verkleinerter Schlauchbreite,

Fig. 3: ein Ausführungsbeispiel gemäß der vorliegenden Erfindung, bei welcher die Systemlänge an die verkleinerte Schlauchbreite anpassbar ist,

Fig. 4: ein Ausführungsbeispiel einer erfindungsgemäßen Übergabevorrichtung,

Fig. 5: ein Ausführungsbeispiel einer erfindungsgemäßen Bodenöffnungsstation und

Fig. 6: ein Ausführungsbeispiel einer erfindungsgemäßen Ventil- und / oder Deckblattschweißstation.

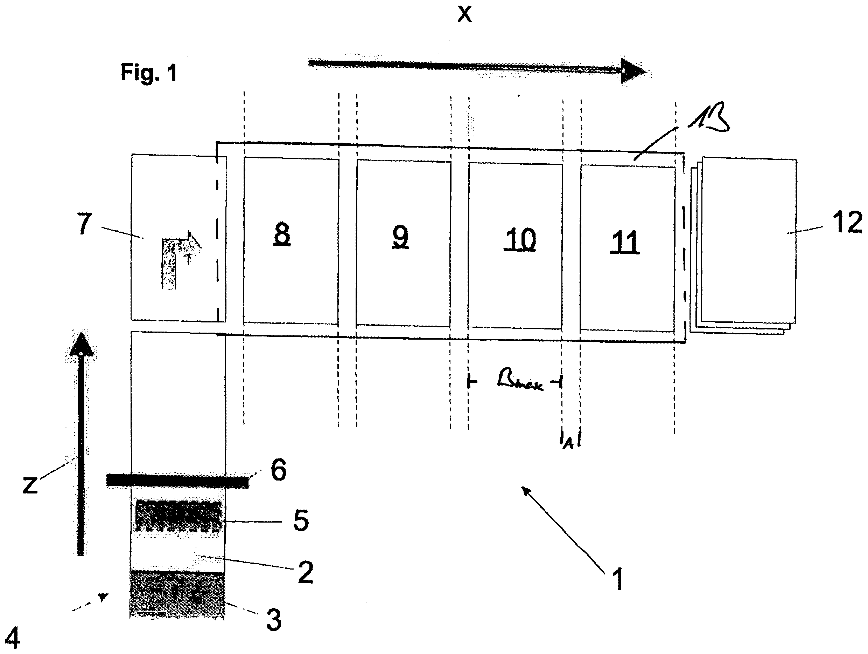

Fig. 1 zeigt ein Ausführungsbeispiel einer Vorrichtung zur Herstellung von Säcken gemäß der vorliegenden Erfindung, wobei die in Fig. 1 schematisch dargestellten Komponenten einer solchen Vorrichtung im Prinzip jedoch bereits aus dem Stand der Technik bekannt sind. Die Komponenten einer solchen erfindungsgemäßen Vorrichtung sowie der erfindungsgemäß durchgeführten Schritte zur Verarbeitung eines Schlauches zu Säcken soll dabei anhand dieser Figur zunächst allgemein dargestellt werden:

Als Ausgangsmaterial zur Herstellung der Säcke dient ein Schlauch, insbesondere ein Gewebeschlauch 2, welcher der erfindungsgemäßen Vorrichtung zur Herstellung von Säcken 1 zugeführt wird. Dies geschieht im Ausführungsbeispiel durch eine Abwickelvorrichtung 4, welche den zunächst als Wickel 3 vorliegenden Schlauch abwickelt. Weiterhin ist eine Öffnungsstation 5 vorgesehen, von welcher aus der Schlauch 2 von der Abwickelvorrichtung 4 gelangt. In dieser wird der Schlauch um ein Innenwerkzeug herumgeführt, welches die beiden Lagen voneinander trennt, so dass sich die Lagen, falls sie bei einem der Herstellungsschritte des Schlauches miteinander verklebt wurden, trennen. Durch die Trennung der Lagen wird sichergestellt, dass die folgenden Produktionsschritte ordnungsgemäß durchgeführt werden können. Im Anschluss werden die voneinander getrennten Materiallagen des Schlauches wieder aufeinander gelegt.

Der Schlauch wird dann einer Vereinzelungsvorrichtung 6 zugeführt, welche die einzelnen Schlauchstücke von dem schlauchförmigen Material abtrennt. Hierzu ist insbesondere eine Querschneideeinrichtung vorgesehen, welche den Gewebeschlauch in einzelne Schlauchstücke vereinzelt. Der Vorschub des schlauchförmigen Materials von der Abwickelvorrichtung zur Vereinzelungsvorrichtung erfolgt dabei in Längsrichtung z des Schlauches.

Die vereinzelten Schlauchstücke werden dann einer Übergabevorrichtung 7 zugeführt, mittels welcher die einzelnen, in Längsrichtung zugeführten Schlauchstücke an eine Transporteinrichtung 13 in Transportrichtung x übergebbar sind. In der Übergabevorrichtung erfolgt damit eine Änderung der ursprünglichen Transportrichtung z, in der der Schlauch bzw. die Schlauchstücke in Richtung ihrer Längsrichtung (z) transportiert werden, in die neue Transportrichtung (x), so dass die Schlauchstücke nun nicht mehr in Richtung (z) ihrer Längsachse, sondern quer hierzu transportiert werden, so dass die Enden der Schlauchstücke zwecks Anformung der Böden seitlich erreichbar sind.

Die Transporteinrichtung 13, welche die von der Übergabevorrichtung 7 übergebenen Schlauchstücke übernimmt, transportiert diese kontinuierlich entlang eines Transportweges in Transportrichtung (x) an mehreren Bearbeitungsstationen 8 bis 11 vorbei, an welchen die Schlauchstücke in mehreren Schritten so bearbeitet werden, dass aus den Schlauchstücken fertige Säcke gebildet werden. Die Schlauchstücke sind dabei vorteilhafterweise in horizontaler Lage förderbar.

Die Transporteinrichtung kann dabei beispielsweise ein umlaufendes Förderband aufweisen, an welchem die Schlauchstücke fixiert und entlang des Transportweges transportiert werden. Dabei kann insbesondere eine magnetische Fixierung erfolgen, beispielsweise indem die Schlauchstücke zwischen dem umlaufenden Band und einer feststehenden oder ebenfalls umlaufenden Gegenstrecke eingeklemmt werden, wobei sich das umlaufenden Band und die Gegenstrecke magnetisch anziehen.

Die Schlauchstücke werden von der Transporteinrichtung 13 zunächst zur Bodenöffnungsstation 8 transportiert, in welcher die beiden Enden eines jeden Schlauchstückes aufgestellt, geöffnet und zu sogenannten Bodenquadraten gelegt werden.

In der darauf folgenden Ventilstation 9 wird auf eines der beiden offenen Enden ein Ventilzettel aufgelegt und befestigt.

In der Bodenschließstation 10, zu welcher die Schlauchstücke daraufhin transportiert werden, werden die Böden geschlossen, wobei zwei Laschen aufeinander gelegt werden und miteinander dauerhaft, beispielsweise durch Verschweißen, verbunden werden.

Den Abschluss des eigentlichen Sackherstellungsprozesses bildet das Aufbringen je eines Bodendeckblattes auf die Böden in der Deckblattauflagestation 11. Hierzu können die Deckblätter ebenfalls aufgeschweißt werden.

Die fertigen Säcke werden anschließend von der Transportstrecke 13 abgenommen und auf einem Sackstapel 12 abgelegt und von dort auf nicht näher beschriebene Weise abtransportiert.

Sowohl die Übergabevorrichtung 7, als auch die Bearbeitungsstationen 8 bis 11 und insbesondere die Bodenöffnungsstation 8 weisen jeweils Werkzeuge auf, welche zu den Schlauchstücken in Kontakt treten.

Die Bewegung der Werkzeuge muss dabei mit der Verfahrbewegung der Schlauchstücke, welche diese durch die Transporteinrichtung 13 erfahren, synchronisiert werden. Die Werkzeuge sind dabei üblicherweise entlang einer umlaufenden Bahn geführt, und werden so in ihre Ausgangsposition zurückverfahren, nachdem sie außer Kontakt mit dem zuletzt bearbeiteten Schlauchstück gekommen sind. Üblicherweise sind dabei in einer solchen umlaufenden Bahn mindestens zwei Werkzeuge vorgesehen, so dass das zweite Werkzeug in seine Ausgangsposition zurückverfahren werden kann, während ein erstes Werkzeug mit einem Schlauchstück in Kontakt steht und mit diesem mit verfahren wird.

Gemäß dem Stand der Technik wurden die Werkzeuge dabei gleichförmig bewegt. Die Länge des Verfahrwegs zwischen den einzelnen Werkzeugen der Bearbeitungsstationen definierte damit eine maximale Schlauchbreite $B_{max}$, welche mit einem festen Abstand A auf der Transportbahn abgelegt und gearbeitet werden konnten.

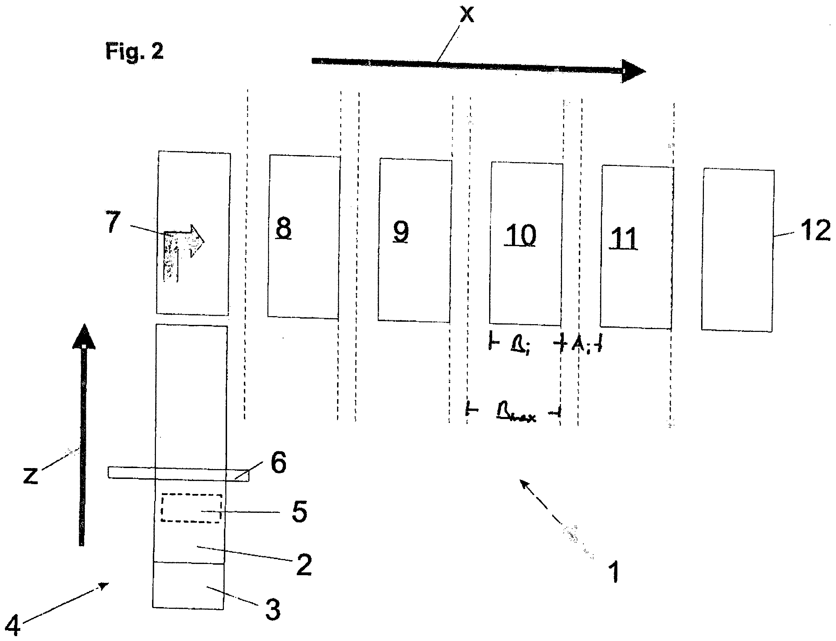

In Fig. 2 ist nun dargestellt, wie Säcke mit einer Sackbreite $B_i$, welche kleiner ist als die maximale Sackbreite $B_{max}$, in einer Vorrichtung gemäß dem Stand der Technik verarbeitet wurden. Da die Vorrichtung gemäß dem Stand der Technik auf eine feste Systemlänge $B_{max}$ + A festgelegt ist, kommt es bei der Verarbeitung von schmaleren Produkten zu größeren Lücken zwischen den einzelnen Produkten, deren Breite $A_i = A + B_{max} - B_i$ beträgt. Eine typische Systemlänge $B_{max}$ + A beträgt dabei 635 mm, wobei die maximale Produktbreite $B_{max}$ 600 mm und der vorgesehene Abstand A 35 mm beträgt.

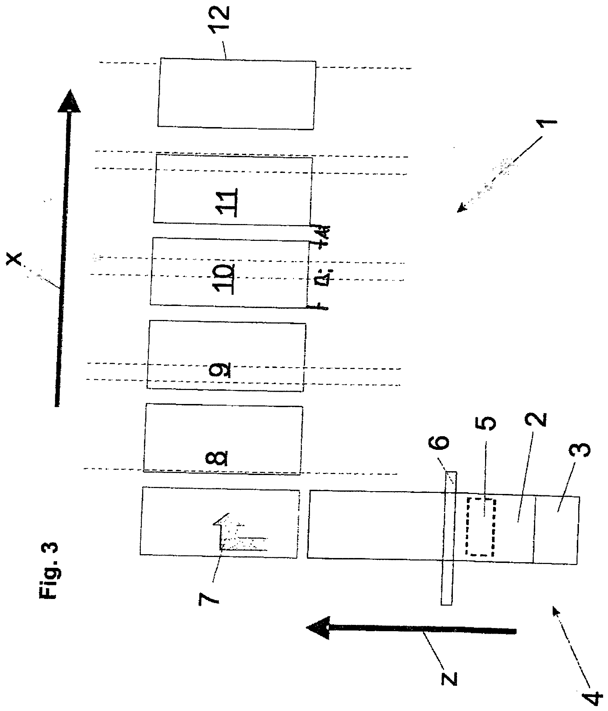

Eine Verarbeitung von Schläuchen mit einer Breite $B_i$, welche unterhalb der maximalen Breite $B_{max}$ liegt, gemäß der vorliegenden Erfindung ist in Fig. 3 dargestellt. Die Vorrichtung gemäß der vorliegenden Erfindung arbeitet dabei systemlängenunabhängig, was bedeutet, dass die zu verarbeitenden Schlauchabschnitte unabhängig von ihrer Breite $B_i$ immer in einem definierten Abstand A auf der Transporteinrichtung 13 abgelegt und verarbeitet werden. Anders ausgedrückt kann die Systemlänge der Maschine an die Breite $B_i$ angepasst werden und beträgt damit $B_i$ + A. Der definierte Abstand A kann dabei z. B. 35 mm betragen.

Die systemlängenunabhängige Ausgestaltung der Vorrichtung gemäß der vorliegenden Erfindung erfordert demgemäß eine Anpassung einzelner Komponenten der Vorrichtung an die jeweilig verarbeitete Breite $B_i$ der Sackstücke. Diese Anpassung kann dabei zum einen durch eine entsprechende Ansteuerung der Antriebe der jeweiligen Komponenten erfolgen, und zum anderen durch eine Veränderung im mechanischen Aufbau dieser Komponenten.

Insbesondere kann dabei vorgesehen sein, dass mindestens eine Komponente, insbesondere die Übergabevorrichtung, ungleichförmig angetrieben wird. Insbesondere ein oder mehrere umlaufende Werkzeuge aufweist, ist deren Geschwindigkeit nur so lange durch die Transportgeschwindigkeit der Transporteinrichtung festgelegt ist, wie ein Werkzeug in Kontakt mit dem Schlauchstück steht. Sind die Werkzeuge dagegen außer Kontakt mit dem Schlauchstück, können diese mit im Wesentlichen frei wählbarer Geschwindigkeit bewegt werden. Diese Tatsache kann dazu eingesetzt werden, durch eine entsprechende Beschleunigung oder Verlangsamung des Antriebs des Werkzeugs dessen Bewegung an die gewählte Schlauchbreite anzupassen.

Insbesondere werden die Werkzeuge dabei, wenn kein Werkzeug in Kontakt mit einem Schlauchstück steht, mit einer von der Schlauchbreite abhängigen Geschwindigkeit verfahren. Die Geschwindigkeit, mit welcher die Werkzeuge verfahren werden, während sie nicht mit dem Schlauchstück in Kontakt stehen, unterscheidet sich demgemäß üblicherweise von der Geschwindigkeit, mit welcher sie verfahren werden, während ein Werkzeug mit dem Schlauchstück in Kontakt steht und demgemäß mit der Transportgeschwindigkeit der Transporteinrichtung synchronisiert werden muss.

Sind dabei mehrere Werkzeuge vorgesehen, welche nacheinander umlaufen, so erfolgt die breitenabhängige unterschiedliche Verfahrbewegung, während keines dieser Werkzeuge mit einem Schlauchstück in Kontakt steht.

Gemäß der vorliegenden Erfindung ist es dabei aber auch möglich, nur einnutzige Werkzeuge zu verwenden, d. h. nur ein umlaufendes Werkzeug einzusetzen. Kommt dieses außer Kontakt mit dem zuletzt bearbeiteten Schlauchstück, wird es in eine Ausgangsposition zurückverfahren, in welcher es mit dem nächsten Schlauchstück in Kontakt tritt.

Dabei können in einer möglichen Ausführungsform mindestens zwei Werkzeuge eingesetzt werden, welche unabhängig voneinander bewegbar sind und abwechselnd mit den Schlauchstücken in Kontakt gebracht werden können. Insbesondere können dabei zwei unabhängig voneinander bewegbar einnutzige Werkzeuge eingesetzt werden. Insbesondere kann dabei an zwei unabhängig arbeitenden, umlaufenden Transportmitteln jeweils ein Mitnehmer angeordnet sein, wobei die Mitnehmer durch eine entsprechende Ansteuerung der Transportmittel abwechselnd arbeiten.

Unabhängig von der Anzahl der Werkzeuge kann das Werkzeug dabei gegebenenfalls auch noch so lange, wie der Schlauchabschnitt nicht mit der Transporteinrichtung in Kontakt steht, mit einer breitenabhängigen Geschwindigkeit verfahren werden, und erst kurz bevor das Schlauchstück von der Transporteinrichtung aufgenommen wird, auf die Transportgeschwindigkeit eingestellt werden.

Alternativ oder zusätzlich ist es möglich, die Position und / oder Größe einzelner Teile der Komponenten der Vorrichtung veränderbar auszugestalten, um diese an die unterschiedlichen Schlauchbreiten anzupassen. Insbesondere ist dabei denkbar, die Umlaufstrecken der Werkzeuge veränderbar auszugestalten, so dass die Umlauflänge verändert und demgemäß an die jeweilig verarbeitete Schlauchbreite angepasst werden kann. Werden die Werkzeuge dabei beispielsweise über eine umlaufende Kette bewegt, so kann deren Länge durch die Aufnahme oder Entfernung von Kettengliedern verändert werden. Gleichzeitig ist die Position der entsprechenden Umlaufräder zu verändern. Hierfür kann die Anordnung der Umlaufräder verstellbar sein, und / oder mehrere mögliche Lagerungspositionen für mehrere unterschiedliche Schlauchbreiten vorgesehen sein. Ebenso ist denkbar, die Werkzeuge an einer dehnbare Umlaufstrecke anzuordnen, welche sich an die durch die Position der Umlaufräder veränderte Länge der Umlaufstrecke anpasst.

Werden die Werkzeuge durch Walzen gebildet oder sind sie auf diesen angeordnet, so ist es ebenfalls denkbar, die Walzen austauschbar zu gestalten und dabei Walzen mit unterschiedlichen Durchmessern vorzusehen, welche alternativ an der Maschine angeordnet werden können. Gegebenenfalls kann dabei die Lagerung der Walzen schwenkbar und / oder verstellbar ausgeführt sein, um an die geänderten Durchmesserverhältnisse angepasst zu werden.

Liegen die Werkzeuge als Walzen vor oder werden diese kreisförmig bewegt, kann diese Bewegung ebenfalls als eine umlaufende Bewegung im Sinne der vorliegenden Anmeldung aufgefasst werden, und der Antrieb entsprechend ungleichförmig erfolgen. Ggf. können die Walzen dabei von der Transporteinrichtung und/oder einem Gegenelement weg bewegt werden, wenn sie nicht mit einem Schlauchstück in Kontakt stehen, um so eine ungleichförmige Bewegung zu erlauben.

Bei anderen Komponenten, bei welchen die Werkzeuge als Walzen vorliegen oder kreisförmig bewegt werden, kann die Bewegung weiterhin synchron zur Transportbewegung der Transporteinrichtung erfolgen, ohne dass eine mechanische Veränderung oder eine ungleichförmige Antriebsgeschwindigkeit vorgesehen wäre. Gegebenenfalls muss jedoch die Zuführung beispielsweise der vereinzelten Schlauchstücke oder der aufzulegenden Zettel, insbesondere der Ventil- oder Bodenzettel, an die Schlauchbreite angepasst werden, um so die Zuführung an die durch die erfindungsgemäß in vorgegebenem Abstand aufeinander folgenden Schlauchstücke von der Schlauchbreite abhängige Taktrate anzupassen.

Erfolgt die Anpassung an die verarbeitete Breite der Schlauchabschnitte durch einen ungleichförmigen Antrieb der jeweiligen Werkzeuge bzw. Komponenten, wird vorteilhafterweise eine mittlere Systemlänge definiert. Die Komponenten sind dann bevorzugt so ausgestaltet, dass sie bei einem gleichförmigen Antrieb Schlauchabschnitte mit einer mittleren Breite verarbeiten. Bei der Verarbeitung kleinerer bzw. größerer Formate erfolgt dann entsprechend ein ungleichförmiger Antrieb, wobei bei kleineren Formaten die Verfahrbewegung der Werkzeuge, wenn diese nicht in Kontakt mit den Schlauchstücken stehen, beschleunigt wird, und bei größeren Formaten verzögert. Hierdurch werden die Geschwindigkeitsänderungen bzw. Beschleunigungen, welche für die Ungleichförmigkeit der Bewegung notwendig sind, verringert. Ein mittleres Format kann dabei beispielsweise zwischen 450 mm und 550 mm liegen, beispielsweise bei 500 mm. Insbesondere kann es sich dabei um ein Zementsackformat handeln.

Werden die Werkzeuge dabei über eine umlaufende Strecke bewegt, ist darauf zu achten, dass der Weg in Transportrichtung, auf welchem ein einzelnes Werkzeug mit einem Schlauchstück in Kontakt steht, kleiner ist als die kleinste zu verarbeitende Schlauchbreite $B_{min}$. Wird dabei eine mittlere Systemlänge definiert, so entspricht die Länge der umlaufenden Strecke zwischen zwei Werkzeugen bevorzugt der mittleren Systemlänge $B_m + A$, d. h. der Breite eines mittleren, zu verarbeitenden Schlauches plus dem definierten Abstand zwischen zwei Schlauchstücken.

Bevorzugt weist die Vorrichtung dabei eine Steuerung auf, welche nach Eingabe oder Messung der Breite der verarbeiteten Schlauchstücke die einzelnen Antriebe der Komponenten automatisch entsprechend ansteuert.

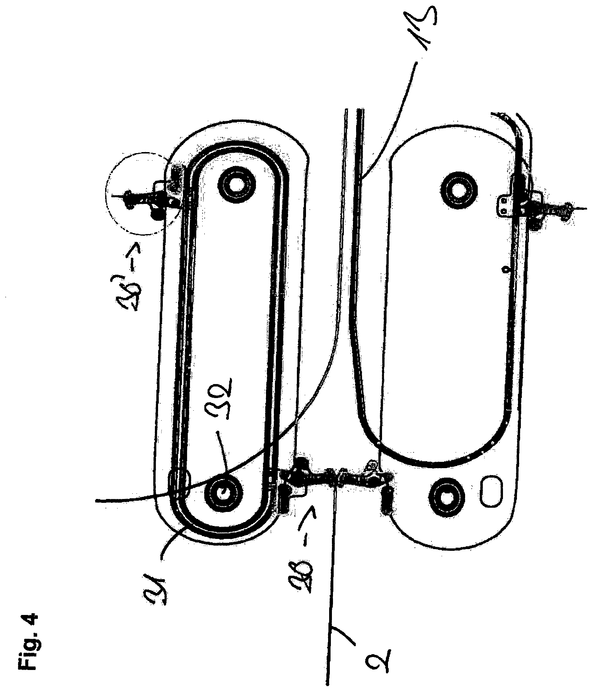

Der Aufbau von beispielhaft einsetzbaren Komponenten gemäß der vorliegenden Erfindung soll dabei noch einmal eingehender anhand von Fig. 4 bis 6 dargestellt werden, welche die Übergabevorrichtung, eine Bodenöffnungsstation sowie eine Zettelauflagestation zeigen.

Fig. 4 zeigt dabei eine Übergabevorrichtung in einer Seitenansicht in einer Betrachtungsrichtung in z-Richtung. Die Schlauchstücke 2 werden damit in einer Richtung senkrecht zur Bildebene der gezeigten Übergabevorrichtung zugeführt, und durch diese in x-Richtung der Transporteinrichtung 13 übergeben. Als Werkzeuge weist die Übergabevorrichtung dabei Mitnehmer 30 auf, welche die Schlauchstücke 2 beidseitig im selben Punkt in z-Richtung bzw. auf derselben Linie in x, z erfassen und in z-Richtung zur Transporteinrichtung 13 verfahren.

Die Mitnehmer 30 sind dabei entlang eines Führungsbleches mithilfe eines umlaufenden Transportmittels 31 geführt. Das Transportmittel 31, beispielsweise eine Kette oder ein Band, ist dabei über Umlaufrollen 32 umlaufend geführt und wird von einem Antrieb angetrieben. An dem Transportmittel 31 sind dabei im Ausführungsbeispiel zwei Mitnehmer 30 und 30' angeordnet, welche abwechselnd jeweils einen Schlauchabschnitt greifen und zur Transporteinrichtung 13 transportieren.

Das Transportmittel wird dabei zumindest solange, wie einer der Mitnehmer 30 oder 30' mit einem Schlauchabschnitt in Kontakt steht und der Schlauchabschnitt zusätzlich mit der Transporteinrichtung in Kontakt, synchron mit der Transporteinrichtung 13 bewegt. In den übrigen Bewegungsphasen kann die Geschwindigkeit des Transportmittels dagegen unabhängig von der Verfahrgeschwindigkeit der Transporteinrichtung verändert werden, und so an die Breite der jeweils verarbeiteten Schlauchabschnitte 2 angepasst werden.

In einer bevorzugten Ausgestaltung der vorliegenden Erfindung ist die Übergabevorrichtung dabei so ausgestaltet, dass bei einem gleichförmigen Antrieb des Transportmittels 31 Säcke mit einer mittleren Breite $B_m$ verarbeitet werden können. Insbesondere kann dabei der Abstand zwischen den Mitnehmern 30 und 30' entlang des Transportmittels 31 der Summe aus der Breite eines Schlauchabschnitts $B_m$ plus dem gewünschten Abstand A der Schlauchabschnitte gewählt werden, d.h. als $B_m + A$. Werden auf der Maschine dann Schlauchabschnitte mit einer Breite $B_i > B_m$ verarbeitet, würden bei einer gleichförmigen Bewegung des Transportmittels die Mitnehmer zu früh wieder in ihren Ausgangspunkt zurückverfahren. Daher muss die Geschwindigkeit des Transportmittels 31 in dem Zeitraum, in welchem die Mitnehmer nicht in Kontakt mit einem Schlauchabschnitt stehen und / oder die Schlauchabschnitte zumindest nicht mit der Transporteinrichtung 13 in Kontakt stehen, entsprechend verlangsamt werden. Umgekehrt muss die Geschwindigkeit in diesem Zeitraum erhöht werden, wenn Schlauchabschnitte mit einer Breite $B_i < B_m$ verarbeitet werden.

Dabei ist die Umlaufstrecke des Transportmittels 30 so zu wählen, dass der Weg, auf welchem einer der Mitnehmer mit einem Schlauchabschnitt in Kontakt steht, kleiner ist als die minimal zu verarbeitende Schlauchbreite $B_{min}$.

Während im Ausführungsbeispiel die vorliegende Erfindung anhand eines umlaufenden Transportmittels mit zwei Werkzeugen, d. h. zwei Mitnehmern, beschrieben wurde, könnte das gleiche Prinzip auch dann angewandt werden, wenn nur ein einziges Werkzeug eingesetzt wird. Hierdurch erhöht sich jedoch der Anteil der Ungleichförmigkeit in zeitlicher Hinsicht. Weiterhin kann selbstverständlich auch eine umlaufende Transportstrecke mit mehr als zwei Werkzeugen eingesetzt werden.

Alternativ können zwei Werkzeuge, d. h. zwei Mitnehmern, eingesetzt werden, welche jedoch an zwei unabhängig voneinander arbeitenden umlaufenden Transportmittel angeordnet sind und jeweils abwechselnd Schlauchstücke auf das Transportband übergeben. Durch die beiden separaten Transportmittel kann die Anpassung an die Breite $B_i$ erheblich vereinfach und der Anteil der Ungleichförmigkeit in zeitlicher Hinsicht verringert werden. Weiterhin können selbstverständlich auch mehrere umlaufende Transportstrecken mit zwei oder mehr Werkzeugen eingesetzt werden.

Bevorzugt wird dabei ein und bevorzugt jedes umlaufende Transportmittel über einen Servomotor angetrieben.

Alternativ oder zusätzlich zu dem ungleichförmigen Antrieb wäre auch eine Veränderung der Länge des Transportmittels 30 denkbar, um die Übergabestation an unterschiedliche Systembreiten anzupassen. Hierfür könnten beispielsweise zusätzliche Kettenglieder eingesetzt bzw. Kettenglieder entfernt werden. Dementsprechend müssten die Umlenkrollen 32 in ihrer Position versetzbar sein, beispielsweise in dem an dem entsprechenden Gehäuse, in welchem sie gelagert sind, mehrere Lagerstellen, welche mehreren Systembreiten entsprechen, vorgesehen sind, oder indem die Lagerung schwenkbar oder verschiebbar erfolgt.

Die Ausgestaltung der Übergabevorrichtung sowie der vorangeschalteten Komponenten kann dabei ansonsten so erfolgen, wie dies aus der DE 10 2008 017 443 A1 bekannt ist. Dabei muss dann lediglich die Taktgeschwindigkeit, mit welcher die Abwickelvorrichtung und die Vereinzelungsvorrichtung arbeiten und der Übergabevorrichtung vereinzelte Schlauchstücke zuführen, entsprechend an die Taktgeschwindigkeit der Übergabevorrichtung angepasst werden.

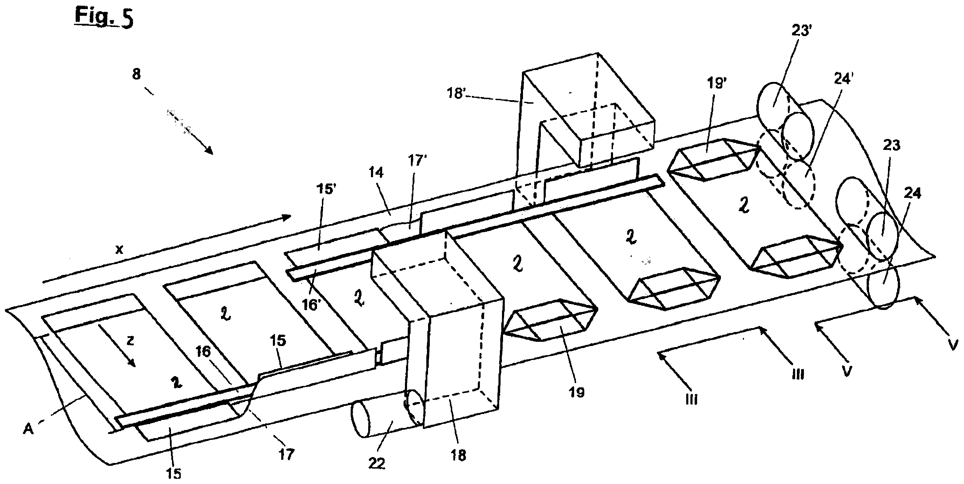

In Fig. 5 ist ein Ausführungsbeispiel einer erfindungsgemäßen Bodenöffnungsstation 8 gezeigt. Die Schlauchstücke 2 werden dabei mittels der Transportvorrichtung 13 in Richtung x auf der Oberfläche einer Auflage 14, beispielsweise auf der Oberfläche eines Tisches, flachliegend, also horizontal, transportiert. Um ein Ende 15 der Schlauchstücke erfindungsgemäß zu öffnen, wird dieses Ende zunächst aus der horizontalen Lage in eine vertikale Position gebracht. Um dieses Falten zu ermöglichen, muss das Schlauchstück mit einer Gegenlage beaufschlagt sein. Hierzu wird das Schlauchstück 13 unter ein Falzband 16 eingefädelt. Ist das Schlauchstück 13 eingefädelt, wird es anschließend an einem Leitelement 17, beispielsweise einem Leitblech, vorbei geführt und hierdurch in eine vertikale Position gebracht.

Hierbei kann ein nicht gezeigtes Gebläse vorgesehen sein, welches die Enden 15 der Schlauchstücke leicht anhebt, so dass dieses mit dem Leitelement 17 in Kontakt tritt. Das Gebläse wird dabei durch einen Sensor ausgelöst, welcher die Vorderkante der Schlauchstücke erkennt. Der Sensor weist ein definiertes Zeitfenster auf, in welchem er aktiv ist. Erfindungsgemäß wird dieses Zeitfenster an die Breite $B_i$ der Schlauchstücke und die damit vorgegebene Systembreite $B_i + A$ angepasst. Danach gelangt das Schlauchstück zur eigentlichen Bodenöffnungsvorrichtung 18, welche in Fig. 5 schematisch dargestellt ist. In einer solchen Bodenöffnungsvorrichtung sind zwei Saugerbalken vorgesehen, die beiderseits des angeklappten Endes angreifen und in bzw. gegen die Richtung z geführt werden, so dass die Materiallagen voneinander getrennt werden. Gleichzeitig werden die Saugerbalken auch in Richtung x bewegt, um an den weiter transportierten Sack angreifen zu können. Das Innere des Endes 15 des Schlauchstücks 13 ist nun zugänglich. In diesen Innenraum greifen nun Spreizelemente ein, die die Materiallagen weiter auseinander drücken, bis diese wieder horizontal liegen. Diese Situation ist anhand des geöffneten Bodens 19 dargestellt. Auch die Spreizelemente werden dabei in Richtung x bewegt, um an den weiter transportierten Sack angreifen zu können.

Die Saugerbalken sowie die Spreizelemente bilden damit ebenfalls Werkzeuge, welche mit den Schlauchstücken in Kontakt kommen und während dieses Kontaktes synchronisiert mit der Transporteinrichtung 13 bewegt werden müssen. Hierfür sind diese bevorzugt an einem umlaufenden Transportmittel angeordnet. Insbesondere kann die Anordnung dabei so erfolgen, wie dies bereits im Hinblick auf die Mitnehmer 30 der Übergabestation in Fig. 4 beschrieben wurde. Dementsprechend erfolgt auch die Ansteuerung des Antriebs des umlaufenden Transportmittels bevorzugt so, wie dies bereits im Hinblick auf die Übergabevorrichtung beschrieben wurde. Bevorzugt wird das umlaufende Transportmittel dabei über einen Servomotor angetrieben.

Insbesondere muss das Transportmittel dabei nur so lange synchronisiert zu der Transporteinrichtung 13 arbeiten, wie eines der Werkzeuge in Kontakt mit einem Schlauchstück steht. Steht dagegen keines der Werkzeuge in Kontakt mit dem Schlauchstück, kann die Geschwindigkeit des umlaufenden Transportmittels zur Anpassung an unterschiedliche Breiten entsprechend unterschiedlich gewählt werden. Vorteilhafterweise ist auch hier wieder eine mittlere Systemlänge $B_m$ definiert, bei welcher die Bodenöffnungsstation mit maximaler Gleichförmigkeit angetrieben wird.

Dabei kann vorgesehen sein, dass die umlaufenden Werkzeuge zum Aufspreizen der zuvor geöffneten Enden der Schlauchstücke so bewegt werden, so dass sie zunächst mit der vorderen Kante des Schlauchstücks in Eingriff kommen, dieses Aufspreizen, daraufhin in Kontakt mit dem Schlauchstück über dieses gleiten und dann kurz vor oder im Bereich der hinteren Kante außer Eingriff mit dem Schlauchstück kommen. Insbesondere werden die Werkezeuge dabei, damit sie daraufhin in Kontakt mit dem Schlauchstück über dieses gleiten, mit einer Geschwindigkeit bewegt, welche unter der Transportgeschwindigkeit der Schlauchstücke auf dem Transportband liegt, d.h. mit einer definierten Relativgeschwindigkeit hierzu.

Insbesondere werden die umlaufenden Werkzeuge zum Aufspreizen der zuvor geöffneten Enden der Schlauchstücke dabei mit einem vorgegebenen Geschwindigkeitprofil bewegt. In einem Sonderfall kann das Geschwindigkeitsprofil dabei einer gleichförmigen Bewegung entsprechen. Üblicherweise wird das Geschwindigkeitsprofil jedoch unterschiedliche Geschwindigkeiten insbesondere für die Phasen vorsehen, in welchen die Werkzeuge außer Kontakt bzw. in Kontakt mit einem Schlauchstück stehen. Erfindungsgemäß wird dieses Geschwindigkeitsprofil dabei in Abhängigkeit von der Breite $B_i$ der Schlauchstücke so eingestellt, dass der zeitliche Abstand zwischen den Zeitpunkten, zu welchen das mindestens eine Werkzeug mit aufeinander folgenden Schlauchstücken in Kontakt tritt, von der Breite $B_i$ abhängt. Insbesondere kann die Einstellung dabei so erfolgen, dass sich die Transporteinrichtung und damit die Schlauchstücke zwischen den Zeitpunkten, zu welchen das mindestens eine Werkzeug mit aufeinander folgenden Schlauchstücken in Kontakt tritt, um eine Strecke $B_i$ + A weiter bewegt.

Im Ausführungsbeispiel sind dabei zwei separate Bodenöffnungsvorrichtungen 18 und 18' vorgesehen, welche die Schlauchstücke auf ihren gegenüberliegenden Endseiten öffnen. Die beiden Bodenöffnungsstation weisen dabei jeweils separate Antriebe auf. Im Ausführungsbeispiel sind die beiden Bodenöffnungsstationen dabei versetzt zueinander angeordnet.

Die erfindungsgemäße Öffnungsstation kann damit die Schlauchstücke systemlängenunabhängig öffnen, was insbesondere durch den ungleichförmigen Antrieb der entsprechenden Werkzeuge geschieht. Gegebenenfalls können dabei einnutzige Werkzeuge verwendet werden, was den zeitlichen Anteil der Ungleichförmigkeit erhöht.

Ansonsten kann die Bodenöffnungsstation so aufgebaut sein, wie dies in der Druckschrift DE 10 2008 017 442 A1 dargestellt ist.

Den Abschluss der Bodenöffnungsstation bilden die Anpresswalzen 23 und 23', welche dazu dienen, die geöffneten Böden zu verpressen und damit in ihrer Lage zu fixieren. Als Gegendruckelement zu den Anpresswalzen 23 und 23' dient entweder die Auflage 14, oder Gegendruckwalzen 24 und 24'. Die Anpresswalzen und Gegendruckelemente können dabei weiterhin gleichförmig angetrieben werden.

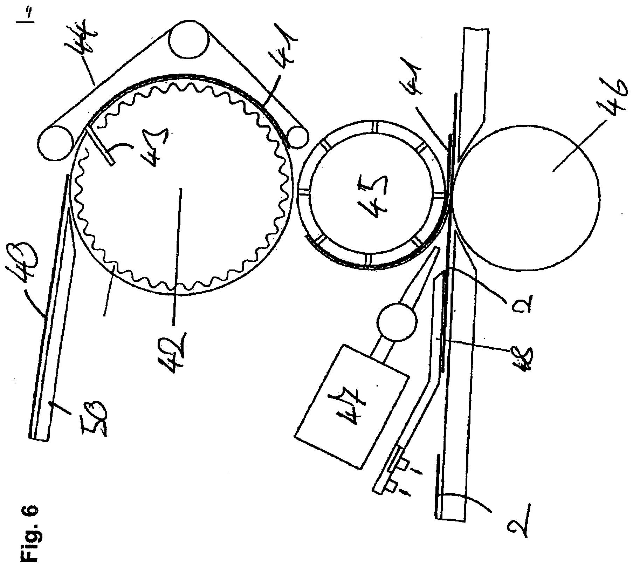

In Fig. 6 ist nun ein Ausführungsbeispiel einer Zettelauflagestation dargestellt, welche Ventil- und / oder Deckblätter auf die Schlauchstücke auflegen und dort anschweißen kann.

Der Zettelauflagestation wird über einen Zulauf 50 ein Bahnmaterial 40 zugeführt, von dem die Zettel 41 abgetrennt werden. Dazu wird das vorauslaufende Ende des Bahnmaterials 40 von dem Schneidzylinder 42 erfasst und vorgezogen und von der im Schneidzylinder 42 integrierten Schneideinrichtung 43 quergeschnitten. Das Band 40 bzw. die abgetrennten Zettel 41 werden dabei über die Endlosbahn 44 an den Schneidzylinder 42 gedrückt.

Die so entstandenen Zettel 41 werden vom Saugzylinder 45 übernommen und auf die Schlauchstücke 2 aufgelegt. Der Saugzylinder 45 bildet dabei mit einem Gegendruckzylinder 46 einen Walzenspalt, in welchem der Zettel 41 mit hoher Kraft auf den Sack 2 aufgepresst wird. Einlaufseitig des Walzenspaltes ist ein Heißluftgebläse 47 angeordnet, dessen durch eine Düse gerichteter Heißluftstrom in die Einlaufseite des Walzenspaltes geleitet wird. Die Heißluft verursacht ein Anschmelzen der Beschichtung sowohl im Boden des Sackes 2, als auch auf dem Zettel 41. Der Heißluftstrom wird dabei durch eine Sperrvorrichtung intermittierend unterbrochen und wieder freigegeben, so dass nur dann Heißluft ausströmt, wenn ein Schlauchstück aufgeschmolzen werden soll. Durch das darauf folgende Anpressen der aufgeschmolzenen Oberflächen im Walzenspalt wird eine dauerhafte Verbindung hergestellt. In Transportrichtung z ist dem Heißluftgebläse eine Vortemperiereinrichtung 48 vorgeordnet, welche die eingeführten Schlauchstücke 2 auf die gewünschte Vortemperatur einstellt.

Da die Größe der Zettel von der verarbeiteten Breite der Schlauchstücke abhängt, muss die erfindungsgemäße Zettelauflagestation so ausgestaltet sein, dass je nach verarbeiteter Breite der Schlauchstücke entsprechend lange Zettel abtrennt und in einem vorgegebenen, von der Sackbreite weitgehend unabhängigen Abstand zur Verfügung stellt.

In einem ersten Ausführungsbeispiel wird dies durch einen ungleichförmigen Antrieb des Schneidzylinders 42 realisiert, während der Saugzylinder 45 gleichförmig und synchron mit der Transporteinrichtung mitläuft. Dabei wird der Schneidezylinder 42 solange, wie ein Zettel 41 an den Saugzylinder 45 übergeben wird, synchron mit dem Saugzylinder 45 angetrieben. Wird gerade kein Zettel übergeben, erfolgt der Antrieb des Schneidzylinders mit einer Geschwindigkeit, welcher an die verarbeitete Schlauchbreite und damit an die Zettellänge angepasst ist. Der Vorschub des Bahnmaterials 40 muss entsprechend synchronisiert werden.

In einem zweiten Ausführungsbeispiel kann auch der Antrieb des Saugzylinders 45 ungleichförmig erfolgen. Hierzu ist der Saugzylinder 45 von dem Gegendruckzylinder 46 anhebbar, beispielsweise durch eine verschwenkbare Lagerung. Hierdurch kann der Saugzylinder 45, wenn gerade kein Zettel auf ein Schlauchende aufgelegt wird, ebenfalls ungleichförmig angetrieben werden.

In einem dritten Ausführungsbeispiel könnte anstelle des Schneidzylinders 42 ein anderer Querschneider eingesetzt werden, welcher die Zettel in der notwendigen Länge ablängt und mit einem vorgegebenen Abstand dem Saugzylinder 45 zuführt.

Die Saugrolle 45, mit welcher die Zettel tatsächlich auf die Schlauchstücke aufgelegt werden, braucht dagegen nicht ungleichförmig antreibbar sein. Vielmehr kann deren Geschwindigkeit schlicht mit der Geschwindigkeit des Transportbandes synchronisiert werden.

Alternativ kann jedoch auch hier ein ungleichförmiger Antrieb erfolgen. Insbesondere können die Saugöffnungen der Saugrolle 45 nicht über den gesamten Umfang gleichmäßig verteilt sein, so dass ein definierter Saugbereich der Saugrolle mit einem definierten Bereich der Zettel, insbesondere mit der Vorderkante der Zettel, in Kontakt treten muss. In diesem Fall erfolgt der Antrieb der Saugrolle 45 mit einer über den Drehbereich ungleichförmigen Geschwindigkeit, wobei die Ungleichförmigkeit von der Breite der Zettel abhängt. Insbesondere wird die Saugrolle 45 dabei so angetrieben, dass der definierter Saugbereich der Saugrolle immer mit einem definierten Bereich der Zettel, insbesondere mit der Vorderkante der Zettel, in Kontakt kommt.

Weiterhin kann die Gegendruckrolle 46, auch Presseur genannt, in Abhängigkeit von der Breite der Schlauchstücke ungleichförmig antreibbar sein. Insbesondere kann die Gegendruckrolle 46 dabei über ihren Umfang ungleichmäßig ausgestaltet sein und insbesondere einen erhabenen Bereich aufweisen, welcher mit einem definierten Bereich der Schlauchstücke, insbesondere mit einem Bereich, welcher der Vorderkante der aufgelegten Zettel entspricht, in Kontakt treten muss. In diesem Fall erfolgt der Antrieb der Gegendruckrolle 46 mit einer über den Drehbereich ungleichförmigen Geschwindigkeit, wobei die Ungleichförmigkeit von der Breite der Schlauchstücke abhängt. Insbesondere wird die Gegendruckrolle dabei so angetrieben, dass der erhabene Bereich der Gegendruckrolle immer mit einem definierten Bereich der Schlauchstücke in Kontakt kommt.

Alternativ oder zusätzlich kann eine Anpassung an die Schlauchbreite $B_i$ auch durch den Einsatz von in ihrem Umfang entsprechend angepassten Gegendruckrollen 46 erfolgen. Bevorzugt ist in diesem Fall eine Lagerung der Gegendruckrolle an der Vorrichtung mit unterschiedlichen Abständen der Drehachse von der Bahn der Schlauchstücke möglich. Insbesondere können die Lagestellen für die Gegendruckrolle 46 dabei verschiebbar und/oder verschwenkbar sein, und/oder mehrere alternative Lagerstellen vorgesehen sein.

Auch das Heißluftgebläse 47 kann in Abhängigkeit von der Breite $B_i$ der Schlauchstücke unterschiedlich angesteuert werden. Insbesondere wird dabei der zeitliche Abstand zwischen den Zeitpunkten, zu welchen der Luftstrom zur Bearbeitung aufeinander folgender Schlauchstücke durch die Sperrvorrichtung wieder freigegeben wird, in Abhängigkeit von der Breite $B_i$ der Schlauchstücke eingestellt. Als Sperrvorrichtung kann dabei ein Drehschieber oder ein anders gestaltetes Ventil zum Einsatz kommen.

Der Antrieb einer oder mehrere Komponenten, insbesondere der Rollen der Zettelauflagestation kann dabei durch einen oder mehrere Servormotoren erfolgen. Insbesondere werden dabei die Rollen, welche ungleichmäßig angetrieben werden, jeweils durch einen dieser Rolle separat zugeordneten Servomotor angetrieben. Die Sperrvorrichtung kann ebenfalls durch einen Servomotor und/oder über einen elektrischen, pneumatischen und/oder hydraulischen Aktor erfolgen.

Vor der Bodendeckblattauflagestation und nach einer ggf. vorgesehenen Ventilzettelauflagestation kann ein nicht gezeigtes Gebläse vorgesehen sein, welches die äußeren Laschen der geöffneten Böden leicht anhebt, so dass dieses teilflächig zurück gefaltet werden können. Das Gebläse wird dabei durch einen Sensor ausgelöst, welcher die Vorderkante der Schlauchstücke erkennt. Der Sensor weist ein definiertes Zeitfenster auf, in welchem er aktiv ist. Erfindungsgemäß wird dieses Zeitfenster an die Breite $B_i$ der Schlauchstücke und die damit vorgegebene Systembreite $B_i + A$ angepasst.

Die fertigen Säcke werden im Ausführungsbeispiel nach Verlassen der letzten Bearbeitungsstation durch eine Beschleunigungsrolle von der Transporteinrichtung abgenommen und auf einem Stapel abgelegt. Die Beschleunigungsrolle wird dabei auf die Schlauchstücke abgesenkt und rotiert mit einer Geschwindigkeit, welche höher ist als die Geschwindigkeit der Transporteinrichtung. Die Taktgeschwindigkeit des Absenkens wird dabei erfindungsgemäß an die Breite $B_i$ der Schlauchstücke angepasst.

Durch die vorliegende Erfindung erzielt man bei schmaleren Produkten eine erhebliche Leistungssteigerung, da sich die Bahngeschwindigkeit bei gleichem Output entsprechend dem Verhältnis zwischen der maximalen Systemlänge $B_{max} + A$ und der tatsächlich eingesetzten Systemlänge $B_i + A$ verlangsamt. Die so gewonnene Geschwindigkeitsreserve kann für eine höhere Taktleistung verwendet werden, für welche die Verfahrenstechnik bereits vorhanden ist. Die Taktgeschwindigkeit kann damit bei gleichbleibender Bahngeschindigkeit erhöht werden. Weiterhin erhöht sich die Bahngeschwindigkeit der Maschine für eine Leistungssteigerung nicht wie gemäß dem Stand der Technik nach der Formel $(B_{max} + A)$ * Takte / Minute, sondern nach der Formel $(B_i + A)$ * Takte / Minute.

Für ein übliches Zementsackformat mit $B_i = 500$ mm und einen Abstand $A = 35$ mm würde dies gegenüber einer festen Systemlänge $B_{max} + A = 635$ mm eine Leistungssteigerung von

$$1 - 635 \text{ mm} / 535 \text{ mm} = 18,7 \text{ \%}$$

Bedeuten. Durch die vorliegende Erfindung kann daher für ein übliches Zementsackformat bei gleicher Bahngeschwindigkeit eine Leistungssteigerung von beinahe 20 % erreicht werden. Dies entspricht bei einer Ausgangssituation von 80 Takte / Minute einer Erhöhung auf 95 Takte / Minute. Bei noch kleineren Breiten sind entsprechend höhere Steigerungen möglich.

**Patentansprüche**

1. Verfahren zur Herstellung von Kreuzboden-Säcken aus Schlauchstücken (2) mit einer wählbaren Breite $B_i$, umfassend die Schritte:

  - Festlegung der zu verarbeitenden Breite $B_i$ der Schlauchstücke (2) und Bereitstellung von Schlauchstücken (2) mit entsprechender Breite,
  - Übergeben der Schlauchstücke (2) an eine Transporteinrichtung,
  - kontinuierliches und bevorzugt gleichförmiges Transportieren der Schlauchstücke (2) entlang eines Transportweges in einer Transportrichtung (x), die quer zu der Erstreckungsrichtung (z) und parallel zur der Breitenrichtung der Schlauchstücke (2) verläuft, wobei die Schlauchstücke (2) vorteilhafterweise in horizontaler Lage transportiert werden,
  - Legen eines offenen Kreuzbodens, vorteilhafterweise mit mindestens einem umlaufenden Werkzeug durch Aufspreizen der zuvor geöffneten Enden der Schlauchstücke (2) und durch Ausrichten der sich dabei bildenden Eckeinschläge,

  **dadurch gekennzeichnet,**
  **dass** die Übergabe und Bearbeitung der Schlauchstücke (2) in Abhängigkeit von der Breite $B_i$ der Schlauchstücke (2) so variiert wird, dass die Schlauchstücke (2) auf der Transporteinrichtung (13) mit einem von der Breite $B_i$ der Schlauchstücke (2) unabhängigen Abstand A zueinander angeordnet und bearbeitet werden und dass zum Übergeben und Bearbeiten der Schlauchstücke (2) mindestens ein Werkzeug eingesetzt wird, welches hierzu mit den Schlauchstücken (2) in Kontakt gebracht wird, wobei der zeitliche Abstand zwischen den Zeitpunkten, zu welchen das mindestens eine Werkzeug mit aufeinander folgenden Schlauchstücken (2) in Kontakt tritt, in Abhängigkeit von der Breite $B_i$ der Schlauchstücke (2) eingestellt wird.

2. Verfahren nach Anspruch 1, wobei das Werkzeug in Transportrichtung (x) bewegbar ist, wobei vorteilhafterweise die Bewegung des Werkzeuges in Transportrichtung (x) während des Kontaktes mit dem Schlauchstück (2) synchronisiert zur Transportbewegung der Schlauchstücke (2) erfolgt und/oder wobei das Werkzeug vorteilhafterweise eine umlaufende Bahn beschreibt, wobei das Werkzeug bevorzugt über einen Teilbereich der umlaufenden Bahn mit dem Schlauchstück (2) in Kontakt steht, wobei das Werkzeug bevorzugt ungleichförmrig angetrieben wird.

3. Verfahren nach Anspruch 2, wobei mindestens zwei Werkzeuge eingesetzt werden, welche unabhängig voneinander bewegbar sind und abwechselnd mit den Schlauchstücken (2) in Kontakt gebracht werden.

4. Verfahren nach einem der vorangegangenen Ansprüche, wobei die Übergabevorrichtung (7) mindestens ein Werkzeug, insbesondere einen Mitnehmer (30), umfasst, welches mit dem Schlauchstück (2) in Kontakt gebracht wird, wobei das Werkzeug in Transportrichtung (x) bewegt wird, um die einzelnen, in Längsrichtung zugeführten Schlauchstücke (2) an die Transporteinrichtung (13) in Transportrichtung (x) zu übergeben, wobei das Werkzeug bevorzugt eine umlaufende Bahn beschreibt, wobei der Bewegungsantrieb des Werkzeuges in Abhängigkeit von der Breite $B_i$ der Schlauchstücke (2) ungleichförmig angetrieben wird und/oder die Umlauflänge des Werkzeuges in Abhängigkeit von der Breite $B_i$ der Schlauchstücke (2) verändert wird.

5. Verfahren nach Anspruch 4, wobei das Werkzeug über einen Servomotor angetrieben wird, wobei die Ungleichförmigkeit der Bewegung durch eine entsprechende Ansteuerung des Servomotors erzeugt wird, und/oder wobei das Werkzeug in Abhängigkeit davon, ob es in Kontakt mit einem Schlauchstück (2) steht oder nicht, mit unterschiedlichen Antriebsgeschwindigkeiten bewegt wird, wobei die Geschwindigkeit der Bewegung des Werkzeuges, während es nicht in Kontakt mit einem Schlauchstück (2) steht, bevorzugt in Abhängigkeit von der Breite $B_i$ der Schlauchstücke (2) eingestellt wird.

6. Verfahren nach einem der vorangegangenen Ansprüche, wobei ein Werkzeug der Bodenöffnungsstation (8) ungleichförmig angetrieben wird und der zeitliche Abstand zwischen den Zeitpunkten, zu welchen das mindestens eine Werkzeug mit aufeinander folgenden Schlauchstücken (2) in Kontakt tritt, durch Anpassen des Bewegungsprofils des Werkzeuges in Abhängigkeit von der Breite $B_i$ der Schlauchstücke (2) eingestellt wird.

7. Verfahren nach einem der vorangegangenen Ansprüche, wobei in einer Zettelauflagestation auf mindestens ein Ende der Schlauchstücke (2) Zettel (41) aufgelegt werden, wobei mindestens eine Komponente der Zettelauflagestation in Abhängigkeit von der Breite $B_i$ der Schlauchstücke (2) ungleichförmig angetrieben und/oder zur Veränderung ihres Durchmessers ausgetauscht wird, wobei es sich bei der Komponente vorteilhafterweise um den Vorschub für ein Bahnmaterial und/oder eine Schneidrolle (42), über welche die Zettel (41) abgelängt werden und/oder um eine Saugrolle (45), über welche die Zettel (41) aufgelegt werden, und/oder um eine Gegendruckrolle (46), über welche ein Gegendruck auf die Schlauchstücke (2) aufgebracht wird, handelt.

8. Vorrichtung zur Herstellung von Kreuzboden-Säcken aus Schlauchstücken (2) mit einer wählbaren Breite $B_i$, umfassend:

   - eine Transporteinrichtung zum kontinuierlichen und bevorzugt gleichförmigen Transportieren der Schlauchstücke (2) entlang eines Transportweges in einer Transportrichtung (x), die quer zu der Erstreckungsrichtung (z) und parallel zur der Breitenrichtung der Schlauchstücke (2) verläuft, wobei die Schlauchstücke (2) vorteilhafterweise in horizontaler Lage förderbar sind,
   - eine Übergabevorrichtung (7), welche die Schlauchstücke (2) an die Transporteinrichtung übergibt,
   - und eine Bodenöffnungsstation (8) zum Legen eines offenen Kreuzbodens, welche vorteilhafterweise mindestens ein umlaufendes Werkzeug zum Aufspreizen der zuvor geöffneten Enden der Schlauchstücke (2) und zum Ausrichten der sich dabei bildenden Eckeinschläge umfasst,

   **dadurch gekennzeichnet,**
   **dass** die Vorrichtung Einstellmittel aufweist, mittels welcher die Vorrichtung in Abhängigkeit von der Breite $B_i$ der Schlauchstücke (2) so einstellbar ist, dass eine Anordnung und Bearbeitung der Schlauchstücke (2) auf der Transporteinrichtung mit einem von der Breite der Schlauchstücke (2) unabhängigen Abstand A zueinander erfolgt und dass mindestens eine Komponente der Vorrichtung ein Werkzeug aufweist, welches zum Übergeben und Bearbeiten der Schlauchstücke (2) mit diesen in Kontakt gebracht wird, wobei der zeitliche Abstand zwischen den Zeitpunkten, zu welchen das mindestens eine Werkzeug mit aufeinander folgenden Schlauchstücken (2) in Kontakt tritt, in Abhängigkeit von der Breite $B_i$ der Schlauchstücke (2) einstellbar ist.

9. Vorrichtung nach Anspruch 8, wobei das Werkzeug der mindestens einen Komponente in Transportrichtung (x) bewegbar ist, wobei vorteilhafterweise die Bewegung des Werkzeuges in Transportrichtung (x) während des Kontaktes mit dem Schlauchstück (2) synchronisiert zur Transportbewegung der Schlauchstücke (2) erfolgt und/oder wobei das Werkzeug vorteilhafterweise eine umlaufende Bahn beschreibt, wobei das Werkzeug bevorzugt über einen Teilbereich der umlaufenden Bahn mit dem Schlauchstück (2) in Kontakt steht, wobei vorteilhafterweise mindestens zwei Werkzeuge eingesetzt werden, welche unabhängig voneinander bewegbar sind und abwechselnd mit den Schlauchstücken (2) in Kontakt gebracht werden können.

10. Vorrichtung nach einem der vorangegangenen Ansprüche, wobei mindestens eine Komponente der Übergabevorrichtung (7) und/oder einer Zettelauflagestation ungleichförmig antreibbar und/oder in ihrer Größe und/oder Position veränderbar ist.

11. Vorrichtung nach einem der vorangegangenen Ansprüche, wobei die Vorrichtung für eine mittlere Breite $B_m$ der Schlauchstücke (2) ausgelegt ist, wobei zur Verarbeitung von Schlauchstücken (2) kleinerer oder größerer Breite $B_i$ eine Anpassung der Vorrichtung erfolgt, wobei bevorzugt mindestens ein Antrieb der Vorrichtung bei kleinerer Breite langsamer betrieben und bei größerer Breite schneller betrieben wird.

12. Vorrichtung nach einem der vorangegangenen Ansprüche, insbesondere zur Herstellung von Säcken aus Schlauchstücken (2), welche Gewebe aus gereckten Kunststoffbändchen umfassen, wobei das Gewebe mit einer Beschichtung aus einem Polymer versehen ist, zusätzlich umfassend mindestens eine und bevorzugt mehrere der folgenden Komponenten:

- eine Abwickelvorrichtung (4), von der schlauchförmiges Material oder bahnförmiges Material, aus welchem ein Schlauch bildbar ist, abwickelbar und in Längsrichtung (z) vorschiebbar ist,
- eine Vereinzelungsvorrichtung (6), mittels welcher die einzelnen, in Längsrichtung zugeführten Schlauchstücke von dem schlauchförmigen Material abtrennbar sind,
- eine Übergabevorrichtung (7), mittels welcher die einzelnen, in Längsrichtung zugeführten Schlauchstücke (2) an die Transporteinrichtung in Transportrichtung (x) übergebbar und von dieser übernehmbar sind,
- eine Ventilzettelauflagestation (9),
- eine Bodenschließstation (10),
- wahlweise zumindest eine Deckblattauflagestation und
- weiter wahlweise eine Breitenvorgabeeinrichtung, durch welche die Breite der eingesetzten Schlauchstücke (2) der Steuerung übergeben wird, wobei die Steuerung mindestens ein Antriebsparameter mindestens einer Komponente der Vorrichtung in Abhängigkeit von der Breite einstellt, wobei die Breitenvorgabeeinrichtung vorteilhafterweise einen Sensor zur Ermittlung der Breite der Schlauchstücke (2) und/oder eine Eingabeeinheit zur manuellen und/oder elektronischen Eingabe der Breite aufweist.

13. Vorrichtung nach einem der vorangegangenen Ansprüche, wobei das mindestens eine Werkzeug, welches mit dem Schlauchstück (2) in Kontakt bringbar ist, in der Übergabevorrichtung angeordnet ist, wobei das Werkzeug in Transportrichtung (x) bewegbar ist, um die einzelnen, in Längsrichtung zugeführten Schlauchstücke (2) an die Transporteinrichtung in Transportrichtung (x) zu übergeben, wobei das Werkzeug eine umlaufende Bahn beschreibt, wobei in Abhängigkeit von der Breite der Schlauchstücke (2) der Bewegungsantrieb des Werkzeuges ungleichförmig antreibbar und/oder die Umlauflänge des Werkzeuges veränderbar ist.

14. Vorrichtung nach einem der vorangegangenen Ansprüche, wobei das mindestens eine Werkzeug, welches mit dem Schlauchstück (2) in Kontakt bringbar ist, in der Bodenöffnungsstation angeordnet ist, wobei das Werkzeug in Transportrichtung (x) bewegbar ist, um die auf der Transporteinrichtung gleichförmig bewegten Schlauchstücke (2) zu bearbeiten, wobei das Werkzeug eine umlaufende Bahn beschreibt, wobei in Abhängigkeit von der Breite der Schlauchstücke (2) das ungleichförmige Bewegungsprofil des Werkzeuges so einstellbar ist, dass der zeitliche Abstand zwischen den Zeitpunkten, zu welchen das mindestens eine Werkzeug mit aufeinander folgenden Schlauchstücken (2) in Kontakt tritt, in Abhängigkeit von der Breite $B_i$ der Schlauchstücke (2) einstellbar ist, und/oder wobei die Umlauflänge des Werkzeuges veränderbar ist.

15. Vorrichtung nach einem der vorangegangenen Ansprüche, wobei eine Zettelauflagestation mindestens eine Schneidrolle (42) umfasst, welche Zettel (41) zum Auflegen auf die Schlauchstücke (2) abgelängt zur Verfügung stellt, wobei die Schneidrolle (42) in Abhängigkeit von der Breite der Schlauchstücke (2) ungleichförmig und/oder mit unterschiedlicher Geschwindigkeit antreibbar ist, und/oder wobei eine Saugrolle (45), über welche die Zettel (41) aufgelegt werden, und/oder eine Gegendruckrolle (46), über welche ein Gegendruck auf die Schlauchstücke (2) aufgebracht wird, in Abhängigkeit von der Breite der Schlauchstücke (2) ungleichförmig antreibbar oder zur Veränderung ihres Durchmessers austauschbar sind.

**Claims**

1. Method for producing cross-bottom bags from tubular pieces (2) having a selectable width $B_i$, comprising the steps:

- determination of the width $B_i$ to be processed of the tubular pieces (2) and provision of tubular pieces (2) having the corresponding width,
- transfer of the tubular pieces (2) to a transport apparatus,
- continuous and preferably uniform transport of the tubular pieces (2) along a transport path in a transport direction (x), which runs transversely to the extension direction (z) and parallel to the width direction of the tubular pieces (2), the tubular pieces (2) advantageously being transported in the horizontal position,
- laying of an open cross bottom, advantageously with at least one revolving tool by spreading apart the previously opened ends of the tubular pieces (2) and by aligning the corner folds formed in the process,

**characterized in that**

the transfer and/or processing of the tubular pieces (2) is varied depending on the width $B_i$ of the tubular pieces (2) in such a manner that the tubular pieces (2) are arranged and/or processed on the transport device (13) with a distance A from each other that is independent of the width $B_i$ of the tubular pieces (2), and that at least one tool is used for the transfer and processing of the tubular pieces (2), which is brought into contact with the tubular pieces (2) for this purpose, wherein the time interval between the points in time when the at least one tool is in contact with successive tubular pieces (2) is set dependent upon the width $B_i$ of the tubular pieces (2).

2. Method according to claim 1, wherein the tool is moveable in the transport direction (x), wherein advantageously the movement of the tool in the transport direction (x) occurs in a synchronized manner with the transport movement of the tubular pieces (2) during the contact with the tubular pieces (2), and/or wherein the tool advantageously describes a circumferential path, wherein the tool preferably is in contact with a tubular piece (2) across a sub-portion of the circumferential path, wherein the tool preferably is driven in a non-uniform manner.

3. Method according to claim 2, wherein at least two tools are used, which are moveable independently from one another, and are alternatingly brought into contact with the tubular pieces (2).

4. Method according to any one of the preceding claims, wherein the transfer apparatus (7) comprises at least one tool, in particular a catch (30), which is brought into contact with the tubular piece (2), wherein the tool is moved in the transport direction (x) in order to transfer the individual tubular pieces (2), supplied in the longitudinal direction, to the transport device (13) in the transport direction (x), wherein the tool preferably describes a circumferential path, wherein the motion drive of the tool is driven in a non-uniform manner dependent upon the width $B_i$ of the tubular pieces (2), and/or the circumferential length of the tool is changed dependent upon the width $B_i$ of the tubular pieces (2).

5. Method according to claim 4, wherein the tool is driven through a servo motor, wherein the non-uniformity of the movement is generated by a corresponding control of the servo motor, and/or wherein the tool is moved at different drive speeds dependent upon whether it is in contact with a tubular piece (2) or not, wherein the speed of the movement of the tool while not in contact with a tubular piece (2) is preferably set dependent upon the width $B_i$ of the tubular pieces (2).

6. Method according to any one of the preceding claims, wherein a tool of the bottom opening station (8) is driven in a non-uniform manner, and the time interval between the points in time when the at least one tool comes into contact with successive tubular pieces (2) is set through adjustment of the movement profile of the tool dependent upon the width $B_i$ of the tubular pieces (2).

7. Method according to any one of the preceding claims, wherein slips (41) are placed on to at least one end of the tubular pieces (2) in a slip placement station, wherein at least one component of the slip placement station is driven in a non-uniform manner and/or exchanged to change its diameter dependent upon the width $B_i$ of the tubular pieces (2), wherein the component preferably is the feeder for a web material and/or a cutting roller (42), via which the slips (41) are cut, and/or a suction roller (45), via which the slips (41) are placed on, and/or a counter-pressure roller (46), via which a counter-pressure is applied to the tubular pieces (2).

8. Apparatus for producing cross bottom sags from tubular pieces (2) having a selectable width $B_i$, comprising:

- a transport device for the continuous and preferably uniform transport of the tubular pieces along a transport path in a transport direction (x), which extends transversally to the extension direction (z) and parallelly to the width direction of the tubular pieces (2), wherein the tubular pieces (2) advantageously can be conveyed in a horizontal position,
- a transfer device (7), which transfers the tubular pieces (2) to the transport device,
- and a bottom opening station (8) for laying an open cross bottom, which advantageously comprises at least one circumferential tool for spreading of the previously opened ends of the tubular pieces (2) and for orienting the corner back-folds formed thereby,

**characterized in that**

the apparatus comprises adjustment means, by means of which the apparatus can be adjusted dependent upon the width $B_i$ of the tubular pieces (2) in such a way that an arrangement and processing of the tubular pieces (2) on the transport device occurs with a distance A that is independent of the width of the tubular pieces (2), and **in that** at least one component of the apparatus comprises a tool, which is brought into contact with the tubular pieces (2) for the transfer and processing thereof, wherein the time interval between the points in time when the at least one tool is brought into contact with successive tubular pieces (2) can be set dependent upon the width $B_i$ of the tubular pieces (2).

9. Apparatus of claim 8, wherein the tool of the at least one component is moveable in the transport direction (x), wherein advantageously the movement of the tool in the transport direction (x) occurs in a synchronized manner with the transport movement of the tubular pieces (2) during the contact with the tubular piece (2), and/or wherein the tool advantageously describes a circumferential path, wherein the tool preferably is in contact with the tubular piece (2) across a sub-portion of the circumferential path, wherein advantageously at least two tools are used, which are moveable independently of one another, and can be brought into contact with the tubular pieces (2) in an alternating manner.

10. Apparatus according to any one of the preceding claims, wherein at least one component of the transfer device (7) and/or a slip placement station can be driven in a non-uniform manner and/or can be changed in size and/or position thereof.

11. Apparatus according to any one of the preceding claims, wherein the apparatus is designed for a medium width $B_m$ of the tubular pieces (2), wherein an adjustment of the apparatus occurs for the processing of tubular pieces (2) of smaller and larger width $B_i$, wherein preferably at least one drive of the apparatus is operated slower in a smaller width, and is operated faster in a larger width.

12. Apparatus according to any one of the preceding claims, in particular for the production of bags from tubular pieces (2) that include a mesh of stretched plastic straps, wherein the mesh is provided with a polymer coating, additionally comprising at least one and preferably multiple of the following components:

- an unwinding device (4), from which tubular material or web-shaped material, from which a tube can be formed, is unwindable and displaceable in the longitudinal direction (z),
- a singulation device (6), by means of which the individual tubular pieces supplied in the longitudinal direction can be cut-off from the tubular material,
- a transfer device (7), by means of which the individual tubular pieces (2), supplied in the longitudinal direction, can be transferred to the transport device in the transport direction (x), and can be taken-up by the transport device,
- a valve slip placement station (9),

- a bottom closing station (10),
- selectively at least one cover sheet placement station, and
- further selectively a width determination means, by means of which the width of the used tubular pieces (2) is handed over to the control, wherein the control sets at least one drive parameter of at least one component of the apparatus dependent upon the width, wherein the width determination means advantageously comprises a sensor for determining the width of the tubular pieces (2) and/or an input unit for the manual and/or electronic input of the width.

13. Apparatus according to any one of the preceding claims, wherein the at least one tool, which can be brought into contact with the tubular piece (2), is arranged in the transfer device, wherein the tool is moveable in the transport direction (x), in order to transfer the individual tubular pieces (2), supplied in the longitudinal direction, to the transport device in the transport direction (x), wherein the tool describes a circumferential path, wherein the motion drive of the tool can be driven in a non-uniform manner and/or the circumferential length of the tool can be changed dependent upon the width of the tubular pieces (2).

14. Apparatus according to any one of the preceding claims, wherein the at least one tool, which can be brought into contact with the tubular piece (2), is arranged in the bottom opening station, wherein the tool is moveable in the transport direction (x), in order to process the tubular pieces (2) uniformly moved on the transport device, wherein the tool describes a circumferential path, wherein dependent upon the width of the tubular pieces (2) the non-uniform movement profile of the tools can be adjusted in such a way that the time interval between the point in time when the at least one tool comes into contact with successive tubular pieces (2) can be set dependent upon the width $B_i$ of the tubular pieces (2), and/or wherein the circumferential length of the tool can be changed.

15. Apparatus according to any one of the preceding claims, wherein a slip placement station comprises at least one cutting roller (42), which provides slips (41) cut for placement on to the tubular pieces (2), wherein the cutting roller (42) can be driven in a non-uniform manner and/or at a different speed dependent upon the width of the tubular pieces (2), and/or wherein a suction roller (45), via which the slips (41) are placed, and/or a counter-pressure roller (46), via which a counter-pressure is applied on to the tubular pieces (2), can be driven in a non-uniform manner dependent upon the width of the tubular pieces (2) can be exchanged to change the diameter thereof.

**Revendications**

1. Procédé servant à fabriquer des sacs à fond croisé à partir de pièces tubulaires souples (2) avec une largeur $B_i$ pouvant être sélectionnée, comprenant les étapes :

   - de fixation de la largeur $B_i$ à traiter des pièces tubulaires souples (2) et de fourniture de pièces tubulaires souples (2) avec une largeur correspondante,
   - de transfert des pièces tubulaires flexibles (2) à un système de transport,
   - de transport continu et de manière préférée uniforme des pièces tubulaires souples (2) le long d'un trajet de transport dans une direction de transport (x), qui s'étend de manière transversale par rapport à la direction d'extension (z) et de manière parallèle par rapport au sens de largeur des pièces tubulaires souples (2), dans lequel les pièces tubulaires souples (2) sont transportées de manière avantageuse en position horizontale,
   - de placement d'un fond croisé ouvert, de manière avantageuse avec au moins un outil circulant en périphérie par écartement des extrémités ouvertes au préalable des pièces tubulaires souples (2) et par orientation des rabats de coin se formant dans ce cadre,

   **caractérisé en ce**
   **que** le transfert et l'usinage des pièces tubulaires souples (2) varient en fonction de la largeur $B_i$ des pièces tubulaires souples (2) de telle sorte que les pièces tubulaires souples (2) sont disposées les unes par rapport aux autres et usinées sur le système de transport (13) avec un espacement A indépendant de la largeur $B_i$ des pièces tubulaires souples (2) et que pour transférer et usiner les pièces tubulaires souples (2) au moins un outil est employé, lequel est amené en contact à cet effet avec les pièces tubulaires souples (2), dans lequel l'espacement dans le temps entre les moments, auxquels l'au moins un outil entre en contact avec des pièces tubulaires souples (2) se suivant les unes les autres, est réglé en fonction de la largeur $B_i$ des pièces tubulaires souples (2).

2. Procédé selon la revendication 1, dans lequel l'outil peut être déplacé dans la direction de transport (x), dans lequel de manière avantageuse le déplacement de l'outil est effectué dans la direction de transport (x) pendant le contact avec la pièce tubulaire souple (2) de manière synchronisée par rapport au déplacement de transport des pièces tubulaires souples (2), et/ou dans lequel l'outil décrit de manière avantageuse une trajectoire périphérique, dans lequel l'outil se trouve en contact de manière préférée sur une zone partielle de la trajectoire périphérique avec la pièce tubulaire souple (2), dans lequel l'outil est entraîné de manière préférée irrégulièrement.

3. Procédé selon la revendication 2, dans lequel au moins deux outils sont employés, lesquels peuvent être déplacés indépendamment l'un de l'autre et sont amenés en contact en alternance avec les pièces tubulaires souples (2).

4. Procédé selon l'une quelconque des revendications précédentes, dans lequel le dispositif de transfert (7) comprend au moins un outil, en particulier un entraîneur, lequel est amené en contact avec la pièce tubulaire flexible (2), dans lequel l'outil est déplacé dans la direction de transport (x) pour transférer les diverses pièces tubulaires souples (2) amenées dans la direction longitudinale au système de transport (13) dans la direction de transport (x), dans lequel l'outil décrit de manière préférée une trajectoire périphérique, dans lequel l'entraînement en déplacement de l'outil est entraîné irrégulièrement en fonction de la largeur $B_i$ des pièces tubulaires souples (2) et/ou la longueur périphérique de l'outil est modifiée en fonction de la largeur $B_i$ des pièces tubulaires souples (2).

5. Procédé selon la revendication 4, dans lequel l'outil est entraîné par l'intermédiaire d'un servomoteur, dans lequel l'irrégularité du déplacement est générée par un pilotage correspondant du servomoteur, et/ou dans lequel l'outil est déplacé à des vitesses d'entraînement différentes en fonction de la question de savoir s'il se trouve en contact ou non avec une pièce tubulaire souple (2), dans lequel la vitesse du déplacement de l'outil est réglée, tant qu'il ne se trouve pas en contact avec une pièce tubulaire souple (2), de manière préférée en fonction de la largeur $B_i$ des pièces tubulaires souples (2).

6. Procédé selon l'une quelconque des revendications précédentes, dans lequel un outil du poste d'ouverture de fond (8) est entraîné de manière irrégulière et l'espacement dans le temps entre les moments, auxquels l'au moins un outil entre en contact avec des pièces tubulaires souples (2) se suivant les unes les autres, est réglé en adaptant le profil de déplacement de l'outil en fonction de la largeur $B_i$ des pièces tubulaires souples (2).

7. Procédé selon l'une quelconque des revendications précédentes, dans lequel des étiquettes (41) sont placées dans un poste de placement d'étiquettes sur au moins une extrémité des pièces tubulaires souples (2), dans lequel au moins un composant du poste de placement d'étiquettes est entraîné de manière irrégulière en fonction de la largeur $B_i$ des pièces tubulaires flexibles (2) et/ou est remplacé pour modifier son diamètre, dans lequel le composant est de préférence l'avancement pour un matériau en bande et/ou un galet de découpe (42), par l'intermédiaire duquel les étiquettes (41) sont découpées à la bonne longueur et/ou un galet d'aspiration (45), par l'intermédiaire duquel les étiquettes (41) sont placées, et/ou un galet de contre-pression (46), par l'intermédiaire duquel une contre-pression est appliquée sur les pièces tubulaires souples (2).

8. Dispositif servant à fabriquer des sacs de fond croisé à partir de pièces tubulaires souples (2) avec une largeur $B_i$ pouvant être sélectionnée, comprenant :

- un système de transport servant à transporter en continu et de manière préférée de manière régulière les pièces tubulaires souples (2) le long d'une voie de transport dans une direction de transport (x), qui s'étend de manière transversale par rapport à la direction d'extension (z) et de manière parallèle par rapport à la direction de largeur des pièces tubulaires souples (2), dans lequel les pièces tubulaires souples (2) peuvent être convoyées de manière particulière en position horizontale,

- un dispositif de transfert (7), lequel transfère les pièces tubulaires souples (2) au système de transport,

- et un poste d'ouverture de fond (8) servant à poser un fond croisé ouvert, lequel comprend de manière avantageuse au moins un outil circulant en périphérie servant à écarter les extrémités, ouvertes au préalable, des pièces tubulaires souples (2) et servant à orienter les rabats de coin se formant ce faisant,

**caractérisé en ce**
**que** le dispositif présente des moyens de réglage, au moyen desquels le dispositif peut être réglé en fonction de largeur $B_i$ des pièces tubulaires souples (2) de telle manière qu'un agencement et un usinage des pièces tubulaires souples (2) sont effectués sur le système de transport avec un espacement A indépendant de la largeur des pièces tubulaires souples (2), et que
au moins un composant du dispositif présente un outil, lequel est amené en contact, aux fins du transfert et de l'usinage des pièces tubulaires souples (2), avec celles-ci, dans lequel l'espacement dans le temps entre les moments, auxquels l'au moins un outil entre en contact avec des pièces tubulaires souples (2) se suivant les unes les autres, peut être réglé en fonction de la largeur $B_i$ des pièces tubulaires souples (2).

9. Dispositif selon la revendication 8, dans lequel l'outil de l'au moins un composant peut être déplacé dans la direction de transport (x), dans lequel de manière avantageuse le déplacement de l'outil dans la direction de transport (x) est effectué pendant le contact avec la pièce tubulaire flexible (2) de manière synchronisée par rapport au déplacement de transport des pièces tubulaires souples (2), et/ou dans lequel l'outil décrit de manière avantageuse une trajectoire périphérique, dans lequel l'outil est en contact de manière préférée par l'intermédiaire d'une zone partielle de la trajectoire périphérique avec la pièce tubulaire souple (2), dans lequel de manière avantageuse au moins deux outils sont employés, lesquels peuvent être déplacés indépendamment les uns des autres et peuvent être amenés en contact en variante avec les pièces tubulaires souples (2).

10. Dispositif selon l'une quelconque des revendications précédentes, dans lequel au moins un composant du dispositif de transfert (7) et/ou d'un poste de placement d'étiquette peut être entraîné de manière irrégulière et/ou peut être modifié en termes de taille et/ou de position.

11. Dispositif selon l'une quelconque des revendications précédentes, dans lequel le dispositif est configuré pour une largeur moyenne $B_m$ des pièces tubulaires souples (2), dans lequel pour transformer des pièces tubulaires souples (2) à largeur $B_i$ plus petite ou plus grande, une adaptation du dispositif est effectuée, dans lequel de manière préférée au moins un entraînement du dispositif est exploité plus lentement dans le cas d'une largeur plus taille et plus rapidement dans le cas d'une largeur plus grande.

12. Dispositif selon l'une quelconque des revendications précédentes, en particulier servant à fabriquer des sacs à partir de pièces tubulaires souples (2), lesquels comprennent des tissus composés de bandelettes de plastique étirées, dans lequel le tissu est pourvu d'un revêtement composé d'un polymère, comprenant en supplément au moins un ou de manière préférée plusieurs des composants suivants :

- un dispositif de déroulement (4), duquel du matériau en forme de tuyau souple ou du matériau en forme de bande, à partir duquel un tuyau souple peut être formé, peut être déroulé et avancé dans le sens longitudinal (z),

- un dispositif de tri (6), au moyen duquel les diverses pièces tubulaires souples amenées dans la direction longitudinale peuvent être séparées du matériau en forme de tuyau souple,

- un dispositif de transfert (7), au moyen duquel les diverses pièces tubulaires souples (2) amenées dans le sens longitudinal peuvent être transférées au système de transport dans la direction de transport (X) et peuvent être réceptionnées par celui-ci,

- un poste de placement d'étiquette de soupape (9),
- un poste de fermeture de fond (10),
- au choix au moins un poste de placement de plaque de recouvrement et
- du reste au choix un système de spécification de largeur, qui permet de transférer la largeur des pièces tubulaires souples (2) employées à la commande, dans lequel la commande règle au moins un paramètre d'entraînement d'au moins un composant du dispositif en fonction de la largeur, dans lequel le système de spécification de largeur présente de préférence un capteur servant à déterminer la largeur des pièces tubulaires souples (2) et/ou présente une unité de saisie servant à saisir manuellement et/ou électroniquement la largeur.

13. Dispositif selon l'une quelconque des revendications précédentes, dans lequel l'au moins un outil, lequel peut être amené en contact avec la pièce tubulaire flexible (2), est disposé dans le dispositif de transfert, dans lequel l'outil peut être déplacé dans la direction de transport (x) pour transférer les diverses pièces tubulaires souples (2) guidées dans le sens longitudinal au système de transport dans la direction de transport (x), dans lequel l'outil décrit une trajectoire périphérique, dans lequel en fonction de la largeur des pièces tubulaires souples (2), l'entraînement de déplacement de l'outil peut être entraîné de manière irrégulière et/ou la longueur périphérique de l'outil peut être modifiée.

14. Dispositif selon l'une quelconque des revendications précédentes, dans lequel l'au moins un outil, lequel peut être amené en contact avec la pièce tubulaire souple (2), est disposé dans le poste d'ouverture de fond, dans lequel l'outil peut être déplacé dans le sens longitudinal (x) pour usiner les pièces tubulaires souples (2) déplacées de manière uniforme sur le dispositif de transport, dans lequel l'outil décrit une trajectoire périphérique, dans lequel en fonction de la largeur des pièces tubulaires souples (2), le profil de déplacement non irrégulier de l'outil peut être réglé de telle sorte que l'espacement dans le temps entre les moments, auxquels l'au moins un outil entre en contact avec des pièces tubulaires souples (2) se suivant les unes les autres, peut être réglé en fonction de la largeur $B_i$ des pièces tubulaires souples (2), et/ou dans lequel la longueur périphérique de l'outil peut être modifiée.

15. Dispositif selon l'une quelconque des revendications précédentes, dans lequel un poste de placement d'étiquette comprend au moins un galet de coupe (42), lequel fournit des étiquettes (41) à placer sur les pièces tubulaires souples (2) découpés à la bonne longueur, dans lequel le galet de coupe (42) peut être entraîné en fonction de la largeur des pièces tubulaires souples (2) de manière irrégulière et/ou avec une vitesse différente, et/ou dans lequel un galet d'aspiration (45), par l'intermédiaire duquel les étiquettes (41) sont placées, et/ou un galet de contre-pression (46), par l'intermédiaire duquel une contre-pression est appliquée sur les pièces tubulaires flexibles (2), peuvent être entraînés de manière irrégulière en fonction de la largeur des pièces tubulaires souples (2) ou peuvent être remplacés pour modifier leur diamètre.

Fig. 1

X

7     8     9     10     11     13     12

Z

6

5

2

3

4

1

EP 3 041 671 B1

Fig. 2

EP 3 041 671 B1

Fig. 3

25

Fig. 4

**Fig. 5**

EP 3 041 671 B1

EP 3 041 671 B1

Fig. 6

28

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008017443 A1
- DE 102009000893 A1
- DE 102008017442 A1